# EUROPEAN PATENT SPECIFICATION

(11) **EP 3 459 980 B1**
(45) Date of publication and mention of the grant of the patent: **19.06.2024**
(21) Application number: 17799529.7
(22) Date of filing: 19.05.2017
(51) Int. Cl.: C08F 283/00, C08F 2/44, C08G 65/331, C08L 51/08, C09D 5/16, C09D 171/00

(54) **FLUORINE-CONTAINING COPOLYMER**
FLUORHALTIGES COPOLYMER
COPOLYMÈRE FLUORÉ

(30) Priority: 19.05.2016 JP 2016100767
(43) Date of publication of application: 27.03.2019
(73) Proprietor: Daikin Industries, Ltd., Osaka-shi, Osaka 530-0001 (JP); Osaka University, Suita-shi, Osaka 565-0871 (JP)
(72) Inventor: SHIBUTANI, Shouta, Osaka-shi Osaka 530-0001 (JP); ADACHI, Kenji, Osaka-shi Osaka 530-8323 (JP); AOSHIMA, Sadahito, Suita-shi Osaka 565-0871 (JP)
(74) Representative: Hoffmann Eitle
(86) International application number: PCT/JP2017/018937
(87) International publication number: WO 2017/200105

(56) References cited:
- WO-A1-2013/115380
- JP-A- H10 287 719
- JP-A- 2001 049 276
- JP-A- 2005 240 041
- JP-A- 2011 052 081
- JP-A- 2014 224 235
- JP-A- 2016 056 366

## Description

### Technical Field

The present invention relates to fluorine-containing copolymers, and matters relevant to the fluorine-containing copolymer.

### Background Art

Antifouling techniques for articles are known. Examples of the techniques include (1) a method in which the surface of an article is made highly hydrophobic (water-repellent and/or oil-repellent), (2) a method in which the surface of an article is made highly hydrophilic, (3) a method in which a photocatalyst is added to the surface of an article, (4) a method in which the coating film surface on an article is formed in the microphase-separated structure to prevent adhesion of hydrophilic stain and/or hydrophobic stain, and (5) a method in which an antifouling coating composition is applied to an article.

An example of such antifouling coating compositions is the stain-resistant coating composition suggested in JP-A-2006-083383. The stain-resistant coating composition contains a hydrophilic material (A), a hydrophobic coating polymer (B), an organic solvent for the hydrophobic coating polymer (C), and another organic solvent (D), in which the organic solvent (D) is a high-boiling organic solvent whose boiling point is higher than the boiling point of the organic solvent for the hydrophobic coating polymer (C) by 5°C or more, and the ratio of the hydrophilic material (A) to the hydrophobic coating polymer (B) is (1/99)-(50/50) (on a mass% basis).

However, there is still demand for a new antifouling coating composition.

WO 2013/115380 discloses a fluorine-containing copolymer that includes a structural unit having a specific functional group.

### Summary of Invention

### Technical Problem

An object of the present invention is to provide a novel fluorine-containing copolymer capable of providing antifouling coating compositions.

### Solution to Problem

As a result of extensive research, the present inventors found that a fluorine-containing copolymer of formula (1) exhibits excellent water repellency and oil repellency, as well as high solubility in general-purpose solvents (fluorine-free organic solvents). Thus, the present invention provides a copolymer, which is a fluorine-containing copolymer of formula (1) : 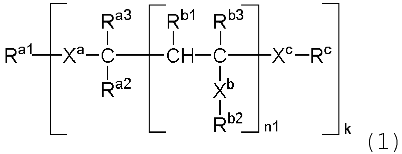 wherein
- R^{a1}: is a mono- or divalent group containing a perfluoropolyether group,
- X^{a}: is -O-, phenylene, -N(-R^{E})- (R^{E} is an organic group), or carbazolylene,
- R^{a2}: is H or alkyl,
- R^{a3}: is H or alkyl,
- R^{b1}: each independently is H or alkyl,
- R^{b2}: each independently is H or an organic group optionally having a hydroxyl group,
- R^{b3}: is H or alkyl, and
- X^{b}: is -O-, phenylene, -N(-R^{E})- (R^{E} is an organic group), or carbazolylene, with the proviso that if R^{b2} is H, X^{b} is phenylene,
- R^{c}: is H, methyl, a perfluoropolyether group-containing group, or an organic group optionally having a hydroxyl group,
- X^{c}: is -O-, -S-, -NH-, or a single bond,
- k: s 1 or 2, and
- n1: is an integer of ≥ 1,
with the proviso that at least one or both of R^{a2} or R^{a3} is alkyl, and if R^{c} is not an organic group having a hydroxyl group, at least one R^{b2} is an organic group having a hydroxyl group.

Also, the present invention provides a composition containing the above copolymer of the invention, and a compound containing a group having reactivity with a hydroxyl group.

Further, the present invention provides a polymer having
(1) at least one structural unit derived from the above copolymer of the invention, and
(2) at least one structural unit derived from a compound containing a group having reactivity with a hydroxyl group.

Yet further, the present invention provides an article which (i) has a coating film comprising the above composition or (ii) contains the above polymer of the invention.

Preferred embodiments of the invention are as defined in the appended dependent claims and/or in the following detailed description.

### Advantageous Effects of Invention

The fluorine-containing copolymer of the present invention is capable of providing an antifouling coating composition.

### Brief Description of Drawings

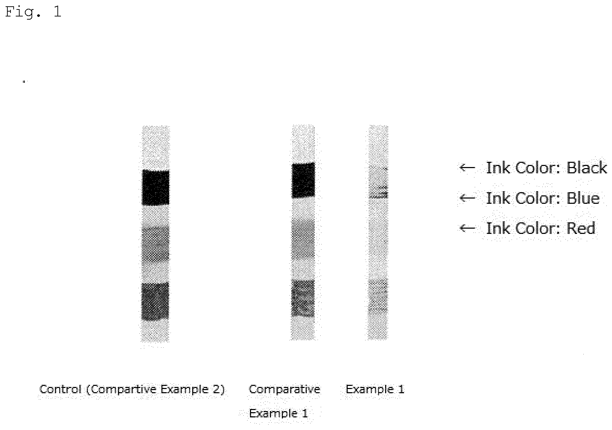

Fig. 1 shows a photograph of samples taken after they were subjected to an antifouling properties test (wiping oil ink).

### Description of Embodiments

### 1. Terms

The symbols and the abbreviations in this specification are to be interpreted as having the general meanings in the related technical field to which the present invention pertains, according to the context of this specification, unless otherwise specified. Especially, herein the following applies.

The term "comprise" or "contain" is intended to encompass the meanings of "consist essentially of" and "consist of."

A numerical range is intended to include the smallest and largest numbers of the range, unless otherwise specified.

The term "bond" or "attach" includes the meanings of a covalent bond, an ionic bond, an electrovalent bond, and adsorption.

The term "reactivity" is intended to include the meaning of "adsorptivity."

The term "reactive" is intended to include the meaning of "adsorptive."

The term "perfluoropolyether group" refers to a monovalent or divalent perfluoropolyether group, unless otherwise specified. The monovalent perfluoropolyether group refers to a perfluoroalkyl group in which an etheric oxygen atom is inserted into one or more carbon-carbon bonds. The divalent perfluoropolyether group refers to a perfluoroalkylene chain in which an etheric oxygen atom is inserted into one or more carbon-carbon bonds. The perfluoropolyether group may be abbreviated as "PFPE."

Examples of the perfluoroalkyl include perfluoroalkyl having 1-12 (preferably 1-6, and more preferably 1-3) carbon atoms.

The perfluoroalkyl may be straight or branched, and is preferably straight.

The perfluoroalkyl may be a group in which all of the hydrogen atoms in alkyl are replaced with fluorine atoms, or a group in which all of the hydrogen atoms of alkyl except for one hydrogen atom at one end of the alkyl are replaced with fluorine atoms. The perfluoroalkyl is preferably a group in which all of the hydrogen atoms in alkyl are replaced with fluorine atoms.

The perfluoroalkylene chain is a group in which all of the hydrogen atoms in an alkylene chain are replaced with fluorine atoms. Examples of the perfluoroalkylene chain include a perfluoroalkylene chain having 1-12 (preferably 1-6 and more preferably 1-3) carbon atoms.

The perfluoroalkylene chain may be straight or branched, and is preferably straight.

In this specification, examples of alkyl include alkyl having 1-12 (preferably 1-6, more preferably 1-3) carbon atoms, and still more preferably 1 carbon atom (e.g., methyl, ethyl, propyl, and isopropyl). The alkyl may be straight or branched, and is preferably straight.

In this specification, examples of the alkylene chain include a straight or branched alkylene chain having 1-12 (preferably 1-6 and more preferably 1, 2, or 3) carbon atoms.

In this specification, examples of the alkanoyl include an alkanoyl group having 2 to 13 (preferably 2 to 7, more preferably 2 to 4, and still more preferably 2) carbon atoms.

The alkanoyl is a group of the formula: RCO- (wherein R is alkyl).

The alkanoyl may be straight or branched, and is preferably straight.

The organic group refers to a carbon-containing group.

### 2. Fluorine-Containing Copolymer

The fluorine-containing copolymer of the present invention (als referred to as "the present copolymer" hereinafter) is a compound of formula (1):

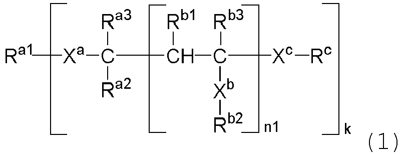

The symbols in formula (1) are explained below.

R^{a1} in formula (1) is a mono- or divalent group containing a perfluoropolyether group. The symbol k is 1 or 2.

The perfluoropolyether group-containing group represented by R^{a1} is preferably a monovalent group containing a monovalent perfluoropolyether group capable of bonding via a linker, or a divalent group containing one or more divalent perfluoropolyether groups each being capable of bonding via a linker.

The lower limit of the number average molecular weight of the perfluoropolyether group is preferably 500, more preferably 800, still more preferably 1000, further more preferably 1500, and particularly preferably 2000, from the viewpoint of achieving high oil repellency and water repellency.

Examples of the perfluoropolyether group include a group having the chain ((α₁₋₃β₁₋₃)ₙ). In this chain ((α₁₋₃β₁₋₃)ₙ), two or more structural units (α₁₋₃β₁₋₃) are linked together, and the structural unit (α₁₋₃β₁₋₃) contains 1-3 (α) groups comprising at least one group from among C₁-C₂ oxyperfluoroalkylene groups, and contains 1-3 (β) groups comprising at least one group from among C₃-C₆ oxyperfluoroalkylene groups.

The order of the (α) group(s) and the (β) group(s) in the structural unit (α₁₋₃β₁₋₃) is not particularly limited. For example, when two (α) groups are present, the two (α) groups may be directly bound to each other, or may be linked via at least one (β) group.

When the structural unit (α₁₋₃β₁₋₃) contains the (α) group at one end and the (β) group at the other end, it is preferable in the chain ((α₁₋₃β₁₋₃)ₙ) above that two or more of the structural units (α₁₋₃β₁₋₃) be linked so that the (α) group and the (β) group are alternately positioned between the structural units; that is, two or more adjacent structural units (α₁₋₃β₁₋₃) are linked to each other to form a head-tail structure (head to tail structure).

Specifically, a preferable embodiment of this perfluoropolyether group is of the following formula (A):

Rf-O-[(Rf¹O)ₓ₁(Rf²O)ₓ₂(Rf³O)ₓ₃(Rf⁴O)ₓ₄(Rf⁵O)ₓ₅(Rf⁶O)ₓ₆]ₙ-β ... (A)

wherein
n is an integer of 2 or more.
x1 and x2 each independently are an integer of 0-3; and (x1+x2) is an integer of 1-3.
x3-x6 each independently are an integer of 0-3; and (x3+x4+x5+x6)
is an integer of 1-3.
Rf¹ is C₁-perfluoroalkylene.
Rf² is C₃-perfluoroalkylene.
Rf³ is C₃-perfluoroalkylene.
Rf⁴ is C₄-perfluoroalkylene.
Rf⁵ is C₅-perfluoroalkylene.
Rf⁶ is C₆-perfluoroalkylene.

Rf represents C₁₋₆-perfluoroalkyl or etheric oxygen-containing C₂₋₆-perfluoroalkyl.

n is an integer of 1 or more. The upper limit of n is preferably 45. n is preferably 4-40, and particularly preferably 5-35.

In the structural unit (αβ), the bonding order of the (α) group and the (β) group is not limited. That is, the (α) group and the (β) group may be positioned randomly, the (α) group and the (β) group may be positioned alternately, or two or more blocks each consisting of multiple same groups may be linked.

Examples of the unit (αβ) include the following:

(CF₂CF₂O-CF₂CF₂CF₂O),

(CF₂CF₂O-CF₂CF₂CF₂CF₂O),

(CF₂CF₂O-CF₂CF₂CF₂OCF₂CF₂CF₂O),

(CF₂CF₂O-CF₂CF(CF₃)OCF₂CF₂CF₂O),

and

(CF₂CF₂O-CF₂CF₂CF₂CF₂OCF(CF₃)CF₂O).

The upper limit of the number average molecular weight of the perfluoropolyether group is preferably 100,000, more preferably 50,000, and still more preferably 10,000, from the viewpoint of achieving high solubility in general-purpose solvents (fluorine-free organic solvents).

The perfluoropolyether group preferably contains a moiety of the formula - (CₚF₂ₚO)ₙₐ-, Wherein p each independently is an integer of 1-6, and na is the number of repeating units.

The moieties of the formula: CₚF₂ₚO repeated na times may each be independent, i.e., may be identical or different.

na is the number of repeating units of 1-1000. The number of repeating units represented by na can be the number average value of the fluorine-containing copolymer.

The perfluoropolyether group-containing monovalent group represented by R^{a1} is preferably a group of formula X^{ra}-(CₚF₂ₚO)ₙₐ-Y^{ra}-L^{a}- (a1),
Wherein X^{ra} is F or Rf-O- (Rf is C₁₋₈-perfluoroalkyl), p each independently is an integer of 1-6, na is the number of repeating units of 1-1000,
Y^{ra} is a C₁₋₆-perfluoroalkylene chain, and
L^{a} is a linker.

The symbols in formula (a1) are explained below.

X^{ra} preferably is F or CF₃-O-.

p each independently preferably is an integer of 2-3.

The moiety of the formula (CₚF₂ₚO)ₙₐ preferably comprises at least one structural unit selected from CF₂-CF₂-CF₂-O-, -CF(-CF₃)-CF₂-O-, -CF₂-O-, -CF₂-CF₂-O-, and -CF(-CF₃)-O-.

na is preferably 1-500, and more preferably 5-150.

Y^{ra} is preferably a group of the formula - (CF₂)_{fa}-CF(-Z^{a})-(CF₂)_{ga}-, Wherein fa and ga each independently are the number of repeating units as an integer that is 0 or more, and (fa+ga) is an integer of 0-5, and Z^{a} is F or -CF₃. Y^{ra} more preferably is -CF₂-, -CF₂-CF₂-, or -CF(-CF₃)-.

It is preferable that the moiety of the formula - (CₚF₂ₚO)ₙₐ-
(1) comprises -CF₂-CF₂-CF₂-O-, and na is 1-1000, and preferably 5-100;
(2) comprises -CF₂-O- and -CF₂-CF₂-O-, and na is 2-1000, and preferably 5-150;
(3) comprises -CF(-CF₃)-CF₂-O-, and na is 1-1000, and preferably 5-100; or
(4) comprises -CF(-CF₃)-CF₂-O- and -CF₂-O-, and na is 2-1000, and preferably 5-150.

In the moiety of the formula X^{ra}-(CₚF₂ₚO)ₙₐ-Y^{ra}-, it is preferable that
(1) X^{ra} is F or Rf-O- (Rf is C₁₋₈-perfluoroalkyl), and preferably F,
   the moiety of the formula (CₚF₂ₚO)ₙₐ comprises -CF₂-CF₂-CF₂-O-, na is 1-1000, and preferably 5-100, and Y^{ra} is -CF₂-CF₂-;
(2) X^{ra} is F or Rf-O- (Rf is C₁₋₈-perfluoroalkyl), and preferably CF₃-O-, the moiety of the formula (CₚF₂ₚO)ₙₐ comprises -CF₂-O- and - CF₂-CF₂-O-, na is 2-1000, and preferably 5-150, and Y^{ra} is -CF₂-;
(3) X^{ra} is F or Rf-O- (Rf is C₁₋₈-perfluoroalkyl), and preferably CF₃-O-,
   the moiety of the formula (CₚF₂ₚO)ₙₐ comprises -CF(-CF₃)-CF₂-O-, na is 1-1000, and preferably 5-100, and Y^{ra} is -CF(-CF₃)-; or
(4) X^{ra} is F or Rf-O- (Rf is C₁₋₈-perfluoroalkyl), and preferably CF₃-O-, the moiety of the formula (CₚF₂ₚO)ₙₐ comprises -CF(-CF₃)-CF₂-O- and -CF₂-O-, na is 2-1000, and preferably 5-150, and Y^{ra} is -CF₂-.

L^{a} is preferably a single bond or a linker with a backbone whose number of atoms is 1-6 (preferably 1-5, 2-5, 1-4, or 2-4).

Specifically, L^{a} may represent, for example, a single bond, -CH₂-, -CH₂-O-, -CH₂-O-CH₂-, -O-CH₂-CH₂-, -C(=O)-O-, -C (=O) -NH-, -CH₂-O-C(=O)-, or -CH₂-(O-CH₂-CH₂)ₙₖ₁- (nk1 is 1-10).

In this specification, the direction of such a linker is not limited, unless otherwise intentionally specified. The direction of the linker in the actual compound may be the same direction as that stated here, or the opposite direction to that stated here.

Of these, -CH₂-O-CH₂-CH₂- or -CH₂- is preferable. Here, the atom shown at the left end of these partial structures is attached to the perfluoropolyether group.

The perfluoropolyether group-containing monovalent group represented by R^{a1} is particularly preferably a group of formula (a1) wherein
(1) X^{ra} is F,
   the moiety of the formula (CₚF₂ₚO)ₙₐ comprises -CF₂-CF₂-CF₂-O-, na is the number of repeating units of 1-1000, and preferably 5-100, Y^{ra} is -CF₂-CF₂-, and L^{a} is -CH₂-O-CH₂-CH₂-;
(2) X^{ra} is CF₃-O-, the moiety of the formula (CₚF₂ₚO)ₙₐ comprises - CF₂-O- and -CF₂-CF₂-O-, na is 1-1000, and preferably 5-150, Y^{ra} is -CF₂-, and
   L^{a} is -CH₂-O-CH₂-CH₂-;
(3) X^{ra} is CF₃-O-, the moiety of the formula (CₚF₂ₚO)ₙₐ comprises - CF(-CF₃)-CF₂-O-, na is 1-1000, and preferably 5-100, Y^{ra} is -CF(-CF₃)-, and L^{a} is -CH₂-O-CH₂-CH₂-;
(4) X^{ra} represents CF₃-O-, the moiety of the formula (CₚF₂ₚO)ₙₐ comprises -CF(-CF₃)-CF₂-O- and -CF₂-O-, na is 1-1000, and preferably 5-150, Y^{ra} is -CF₂-, and
   L^{a} is -CH₂-O-CH₂-CH₂-;
(5) X^{ra} is F, the moiety of the formula (CₚF₂ₚO)ₙₐ comprises -CF₂-CF₂-CF₂-O-, na is 1-1000, and preferably 5-100, Y^{ra} is -CF₂-CF₂-, and L^{a} is -CH₂-;
(6) X^{ra} is CF₃-O-, the moiety of the formula (CₚF₂ₚO)ₙₐ comprises - CF₂-O- and -CF₂-CF₂-O-, na is 1-1000, and preferably 5-150, Y^{ra} is -CF₂-, and L^{a} is -CH₂-;
(7) X^{ra} is CF₃-O-, the moiety of the formula (CₚF₂ₚO)ₙₐ comprises - CF(-CF₃)-CF₂-O-, na is 1-1000, and preferably 5-100, Y^{ra} is -CF(-CF₃)-, and L^{a} is -CH₂-; or
(8) X^{ra} is CF₃-O-, the moiety of the formula (CₚF₂ₚO)ₙₐ comprises - CF(-CF₃)-CF₂-O- and -CF₂-O-, na is 1-1000, and preferably 5-150, Y^{ra} is -CF₂-, and L^{a} is -CH₂-.

The perfluoropolyether group-containing divalent group represented by R^{a1} is preferably a group of formula (a2) or (a2') below.

- L^{a'}-Y^{ra'}-O-(CₚF₂ₚO)ₙₐ-Y^{ra}-L^{a}- (a2),

wherein
L^{a}' and L^{a} each independently are a linker, Y^{ra}' and Y^{ra} each independently are a C₁₋₆-perfluoroalkylene chain, p each independently is an integer of 1-6, and na is the number of repeating units of 1-1000.

The symbols in formula (a2) are explained below.

L^{a'} and L^{a} preferably each independently are a single bond or a linker with a backbone whose number of atoms is 1-6 (more preferably 1-5, 2-5, 1-4, or 2-4).

Specifically, L^{a}' may represent, for example,
a single bond, -CH₂-, -CH₂-CH₂-O-, -O-C(=O)-, -NH-C(=O)-, -C(=O)-O-CH₂-, or - (O-CH₂-CH₂)ₙₖ₁-CH₂- (nk1 is 1-10).

Of these, -CH₂-CH₂-O-CH₂- or -CH₂- is preferable.

Here, the atom shown at the right end of these partial structures is attached to the perfluoropolyether group.

Specifically, L^{a} may represent, for example,
a single bond, -CH₂-, -O-CH₂-CH₂-, -C(=O)-O-, -C(=O)-NH-, -CH₂-O-C(=O)-, or -CH₂-(O-CH₂-CH₂)ₙₖ₁- (nk1 is 1-10).

Of these, -CH₂-O-CH₂-CH₂- or -CH₂- is preferable.

Here, the atom shown at the left end of these partial structures is preferably attached to the perfluoropolyether group.

Y^{ra}' and Y^{ra} preferably each independently are a group of the formula:

- (CF₂)_{fa}-CF(-Z^{a})-(CF₂)_{ga}-,

wherein
fa and ga each independently are an integer that is 0 or more, and (fa+ga) is an integer of 0-5, and Z is F or -CF₃.
Y^{ra}' and Y^{ra} each more preferably are -CF₂-, -CF₂-CF₂-, or -CF(-CF₃)-.

The moieties of the formula CₚF₂ₚO repeated na times may each be identical or different.

p each independently preferably is an integer of 2-4.

The moiety of the formula (CₚF₂ₚO)ₙₐ preferably each independently comprises at least one structural unit selected from CF₂-CF₂-CF₂-O-, -CF(-CF₃)-CF₂-O-, -CF₂-O-, -CF₂-CF₂-O-, and - CF(-CF₃)-O-.

na preferably is each independently 1-500, and more preferably 5-150.

It is preferable that the moiety of the formula - (CₚF₂ₚO)ₙₐ-
(1) comprises -CF₂-CF₂-CF₂-O-, and na is 1-1000, and preferably 5-100;
(2) comprises -CF₂-O- and -CF₂-CF₂-O-, and na is 2-1000, and preferably 5-150;
(3) comprises -CF(-CF₃)-CF₂-O-, and na is 1-1000, and preferably 5-100; or
(4) comprises -CF(-CF₃)-CF₂-O- and -CF₂-O-, and na is 2-1000, and preferably 5-150.

The moiety of the formula -Y^{ra'}-O-(CₚF₂ₚO)ₙₐ-Y^{ra}- is preferably such that
(1) Y^{ra}' is -CF₂-CF₂-, the moiety of the formula (CₚF₂ₚO)ₙₐ comprises -CF₂-CF₂-CF₂-O-, na is 1-1000, and preferably 5-100, and Y^{ra} is -CF₂-CF₂-;
(2) Y^{ra}' is -CF₂-, the moiety of the formula (CₚF₂ₚO)ₙₐ comprises - CF₂-O- and -CF₂-CF₂-O-, na is 2-1000, and preferably 5-100, and Y^{ra} represents -CF₂-;
(3) Y^{ra}' is -CF(-CF₃)-,
   the moiety of the formula (CₚF₂ₚO)ₙₐ comprises -CF(-CF₃)-CF₂-O-, na is 1-1000, and preferably 5-100, and Y^{ra} is -CF(-CF₃)-; or
(4) Y^{ra}' is -CF₂-, the moiety of the formula (CₚF₂ₚO)ₙₐ comprises - CF(-CF₃)-CF₂-O- and -CF₂-O-, na is 2-1000, and preferably 5-100, and Y^{ra} is -CF₂-.

-L^{a'}-Y^{ra'}-(OC_{p'}F_{2p'})_{na'}-O-Rf-O-(CₚF₂ₚO)ₙ-Y^{ra}L^{a}- (a2')

wherein
L^{a}' and L^{a} each independently are a linker, Y^{ra}' and Y^{ra} each independently are a C₁₋₆-perfluoroalkylene chain, p' and p, in each occurrence each independently are an integer of 1-6, na and na' each independently are the number of repeating units of 1-1000, and Rf is a perfluoroalkylene chain.

The symbols in formula (a2') are explained below.

L^{a}' and L^{a} each independently preferably represents a single bond or a linker with a backbone whose number of atoms is 1-6 (more preferably 1-5, 2-5, 1-4, or 2-4).

Examples of such a linker represented by L^{a}' include - CH₂-, -CH₂-CH₂-O-, -O-C(=O)-, -NH-C(=O)-, -C(=O)-O-CH₂-, and -(O-CH₂-CH₂)ₙₖ₁-CH₂- (nk1 is 1-10).

Of these, -CH₂-CH₂-O-CH₂- or -CH₂- is preferable. Here, the atom shown at the right end of these partial structures is preferably attached to the perfluoropolyether group.

Specifically, L^{a} may represent, for example, a single bond, -CH₂-, -O-CH₂-CH₂-, -C(=O)-O-, -C(=O)-NH-, -CH₂-O-C(=O)-, or -CH₂-(O-CH₂-CH₂)ₙₖ₁- (nk1 is 1-10).

Of these, -CH₂-CH₂-O-CH₂- or -CH₂- is preferable. Here, the atom shown at the left end of these partial structures is preferably attached to the perfluoropolyether group.

Y^{ra}' and Y^{ra} each independently preferably area group of the formula:

- (CF₂)_{fa}-CF(-Z^{a})-(CF₂)_{ga}-,

wherein
fa and ga each independently are the number of repeating units as an integer that is 0 or more, and the sum of fa and ga is an integer of 0-5, and Z^{a} is F or -CF₃.
Y^{ra'} and Y^{ra} each independently more preferably are -CF₂-, -CF₂-CF₂-, or -CF(-CF₃)-.

The moieties of the formula OC_{p'}F_{2p'} repeated na' times may each be identical or different.

p preferably each independently is an integer of 2-4.

The moiety of the formula (OC_{p'}F_{2p'})_{na'} preferably each independently comprises at least one structural unit selected from -O-CF₂-CF₂-CF₂-, -O-CF₂-CF(-CF₃)-, -O-CF₂-, -O-CF₂-CF₂-, and - O-CF(-CF₃)-.

na' preferably is each individually 1-500, and more preferably 5-150.

The moieties of the formula CₚF₂ₚO repeated na times may each be identical or different.

p each independently preferably represents an integer of 2-4.

The moiety of the formula (CₚF₂ₚO)ₙₐ preferably each independently comprises at least one structural unit selected from CF₂-CF₂-CF₂-O-, -CF(-CF₃)-CF₂-O-, -CF₂-O-, -CF₂-CF₂-O-, and - CF(-CF₃)-O-.

na preferably each independently is 1-500, and more preferably 5-150.

Rf preferably is a C₁₋₈-perfluoroalkylene chain.

In the moiety of the formula -Y^{ra'}-(OC_{p'}F_{2p'})_{na'}-O-Rf-O-(CₚF₂ₚO)ₙₐ-Y^{ra}-, it is preferable that
Y^{ra}' is -CF(-CF₃)-; the moiety of the formula (OC_{p'}F_{2p'})_{na'} comprises -O-CF₂-CF(-CF₃)-; Rf is a C₁₋₈-perfluoroalkylene chain; the moiety of the formula (CₚF₂ₚO)ₙₐ is -CF(-CF₃)-CF₂-O-; and Y^{ra} is -CF(-CF₃)-.

The perfluoropolyether group-containing divalent group represented by R^{a1} is particularly preferably a group represented by formula (a2), wherein
(1) L^{a}' is -CH₂-CH₂-O-CH₂- or -CH₂-, Y^{ra'} is -CF₂-CF₂-, the moiety of the formula (CₚF₂ₚO)ₙₐ comprises -CF₂-CF₂-CF₂-O-, na is 1-1000, and preferably 5-100, Y^{ra} is -CF₂-CF₂-, and L^{a} is -CH₂-O-CH₂-CH₂- or -CH₂-;
(2) L^{a'} is -CH₂-CH₂-O-CH₂- or -CH₂-, Y^{ra}' is -CF₂-, the moiety of the formula (CₚF₂ₚO)ₙₐ comprises -CF₂-O- and -CF₂-CF₂-O-, na is 1-1000, and preferably 5-100, Y^{ra} is -CF₂-, and L^{a} is -CH₂-O-CH₂-CH₂-or -CH₂-;
(3) L^{a}' is -CH₂-CH₂-O-CH₂- or -CH₂-, Y^{ra}' is -CF(-CF₃)-, the moiety of the formula (CₚF₂ₚO)ₙₐ comprises -CF(-CF₃)-CF₂-O-, na is 1-1000, and preferably 5-100, Y^{ra} is -CF(-CF₃)-, and L^{a} is -CH₂-O-CH₂-CH₂-or -CH₂-;
(4) L^{a}' is -CH₂-CH₂-O-CH₂- or -CH₂-, Y^{ra}' is -CF₂-, the moiety of the formula (CₚF₂ₚO)ₙₐ comprises -CF(-CF₃)-CF₂-O- and -CF₂-O-, na is 1-1000, and preferably 5-100, Y^{ra} is -CF₂-, and L^{a} is -CH₂-O-CH₂-CH₂- or -CH₂-; or
(5) L^{a}' is -CH₂-CH₂-O-CH₂-, Y^{ra}' is -CF(-CF₃)-, the moiety of the formula (OC_{p'}F_{2p'})_{na'} comprises -O-CF₂-CF(-CF₃)-, na' is 1-1000, and preferably 5-100, Rf is a C₁₋₈-perfluoroalkylene chain, the moiety of the formula (CₚF₂ₚO)ₙₐ comprises -CF(-CF₃)-CF₂-O-, na is 1-1000, and preferably 5-100, Y^{ra} is -CF(-CF₃)-, and L^{a} is -CH₂-O-CH₂-CH₂-or -CH₂-.

The symbol X^{a} in formula (1) is -O-, phenylene, -N(-R^{E})- (R^{E} is an organic group), or carbazolylene.

In this specification, phenylene (may be abbreviated as "-Ph-") is of the formula: 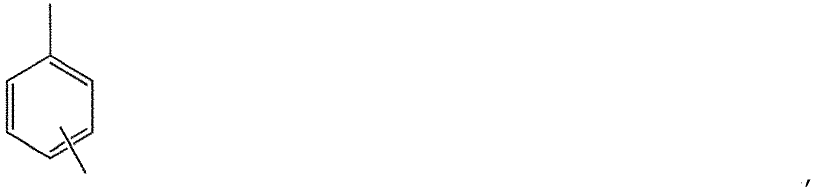 and preferably

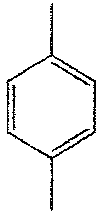

Examples of the organic group represented by R^{E} include alkyl.

In this specification, carbazolylene is of the formula: 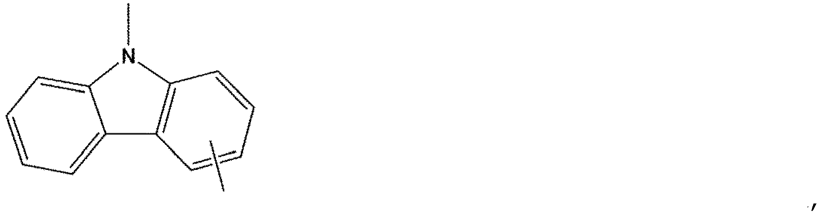 and preferably 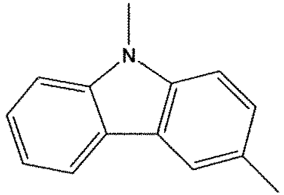 Here, the nitrogen atom in the above structural formulas is attached to the carbon atom in formula (1).

X^{a} preferably is -O-, -Ph-, or carbazolylene, more preferably -O- or -Ph-, and still more preferably -O-.

The symbol R^{a2} in formula (1) is H or alkyl.

R^{a2} preferably is alkyl, more preferably C₁₋₆-alkyl, still more preferably C₁₋₃-alkyl, and particularly preferably methyl.

The symbol R^{a3} in formula (1) is H or alkyl.

R^{a3} preferably is H or methyl, and more preferably H.

However, R^{a2} or R^{a3} or both are alkyl.

n1 is the number of the repeating structural units and is an integer of 1 or more.

n1 is preferably 1 or more, 2 or more, 3 or more, 4 or more, or 5 or more.

n1 is preferably 200 or less, 150 or less, or 100 or less.

n1 is preferably 1-200, 2-200, 3-150, or 4-100; and more preferably 5-100; and still more preferably 5-35.
The OH value (mgKOH/g) of the fluorine-containing copolymer of the present invention is preferably within the range of 1-300 mgKOH/g, more preferably within the range of 5-250 mgKOH/g, and still more preferably within the range of 10-200 mgKOH/g.

R^{b1} each independently is H or alkyl. R^{b1} is preferably hydrogen.

R^{b2} each independently is H or an organic group optionally having a hydroxyl group.

In this specification, the "organic group not having a hydroxyl group" is preferably an organic group not having a functional group that has reactivity with a compound to which the compound of formula (1) is applied (or a compound with which the compound of formula (1) is brought into contact).

Below, the structural unit represented by 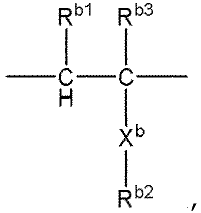 wherein R^{b2} represents an organic group having a hydroxyl group may be abbreviated as "structural unit B."

In contrast, such a structural unit
wherein R^{b2} is H or an organic group not having a hydroxyl group may be abbreviated as "structural unit M."

The organic group having a hydroxyl group represented by R^{b2} is preferably a group having a hydroxyl group that is capable of bonding directly or via a linker to X^{b}.

The target substance to which the present copolymer is attached in this specification may be referred to as "substance B." The substance B, as would be easily understood by a person skilled in the art, may coexist with a substance other than the substance B.

Examples of the substance B include compounds and metals.

Herein, the target compound to which the present copolymer is attached may be referred to as "compound B."

A target metal to which the present copolymer is attached may be referred to as "metal B."

The compound B and the metal B may constitute part or all of the substance B.

The substance B preferably refers to, for example, a compound having a functional group that is reactive with the hydroxyl group, or a substance containing such a compound.

Preferable examples of the substance B include embodiments wherein
the substance B is or contains at least one compound selected from
(1) compounds having at least one functional group selected from hydroxyl, phenoxy, isocyanate, epoxy, acryl, carboxyl, F, Cl, Br, I, aziridinyl, oxetanyl, carbonate, a cyclic ester group, a cyclic amide group, tosyl, mesyl, triflate, and a phosphate-containing group,
(2) sulfonic acid fluorides,
(3) acid anhydrides,
(4) acid halides, and
(5) metals (e.g., copper, aluminum, iron, magnesium, and nickel), or metal oxides corresponding to these metals.

In this specification, examples of the phosphate-containing group include
phosphoester groups (-O-P(=O)(-OR)₂, -P(=O)(-OR)₂),
phosphate groups (-O-P(=O)(-OH)₂, -P(=O)(-OH)₂), and
phosphochloride groups (-O-P(=O)(-Cl)₂, -P(=O)(-Cl)₂).
In these formulas, R is an organic group.

The linker is preferably with a backbone whose number of atoms is 1-16 (more preferably 2-12, and still more preferably 4-10) .

The organic group not having the hydroxyl group represented by R^{b2} refers to a group having a group R^{m} described later, the group R^{m} being capable of bonding directly or via a linker to X^{b}.

The linker in R^{b2} (i.e., a linker through which the hydroxyl group or the group R^{m} is capable of bonding to X^{b}) may be preferably
(a) - (CH₂-CH₂-O)ₙ-, wherein n is an integer of 2-10;
(b) -(CHR^{y})ₙ-O- or - (CHR^{y})ₙ-O-(CHR^{y})ₙ-O-, wherein n each independently is an integer of 1-40 (preferably, for example, 1-20, 1-10, or 1-5), and R^{y}, each independently is H or methyl;
(c) -(CH₂-CH₂-O)ₙ-CO-NH-CH₂-CH₂-O-, wherein n is an integer of 2-10;
(d) - (CHR^{y})ₙ-O-(CHR^{y})ₙ-, wherein n each independently is an integer of 1-40 (preferably, for example, 1-20, 1-10, or 1-5), and R^{y}, each independently is H or methyl (specific examples: - CH₂-CH₂-O-CH₂-CH₂-, -CH₂-CH₂-O-CH₂-);
(e) -(CHR^{y})ₙ-, Wherein n is an integer of 1-6, and R^{y} is H or methyl (a specific example: -CH₂-CH₂-);
(f) - (CH₂)ₙₖ₁-O-CONH-(CH₂)ₙₖ₂-, Wherein nk1 is an integer of 1-8, and preferably 2 or 4, and nk2 is an integer of 1-6, and preferably 3; or
(g) -O- (with the proviso that X^{b} does not represent -O-) .

In one preferable embodiment of the invention, the linker may be preferably represented by the formula -(CHR^{y})ₙ-, - (CHR^{y})ₙ-O-, - (CHR^{y})ₙ-O-(CHR^{y})ₙ-, or - (CHR^{y})ₙ-O-(CHR^{y})ₙ-O-.
In each formula, n each independently is an integer of 1-40, and R^{y} each independently is H or methyl.

R^{m} preferably represents the following groups.

### (i) An alkyl group

### Examples: methyl and ethyl.

### (ii) A chain group containing alkyl substituted with fluorine

### Examples:

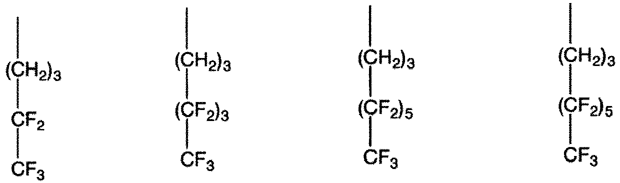

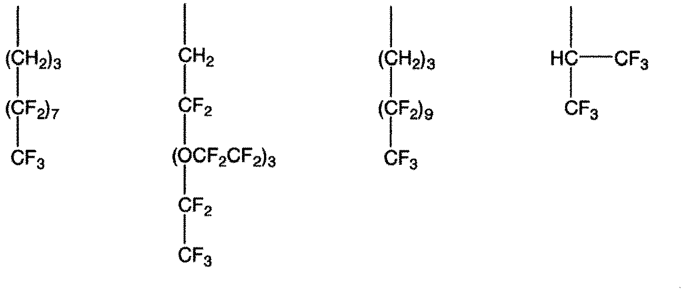

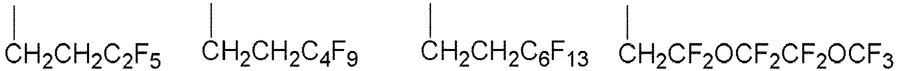

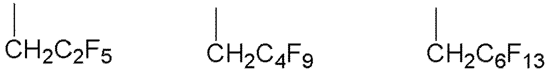

### (iii) A group containing at least one ring selected from a mono-, bi-, tri- and tetracyclic rings

### Examples:

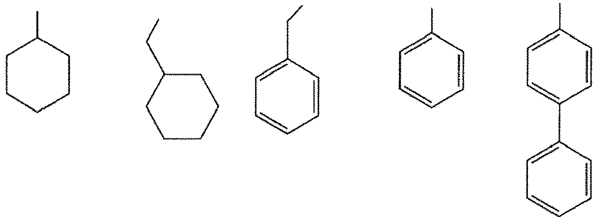

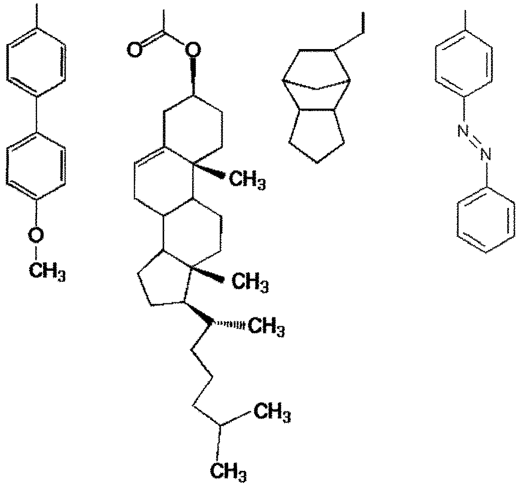

(iv) Hydrogen atom (excluding those constituting the functional group A (e.g., a hydroxyl group) by linking with the linker above or with a portion thereof).

R^{m} is more preferably H, or alkyl that may be fluorinated and attached through an ethylene chain, more preferably H, methoxyethyl, isobutyl, or R^{x}-CF₂-(CF₂)ₙₖ₁-(CH₂)ₙₖ₂-O-(CH₂)₂- (R^{x} is F or H, nk1 is an integer of 0-6, and nk2 is an integer of 1-6), and still more preferably 3-(perfluoroethyl) propoxyethyl (rational formula: CF₃-(CF₂)-(CH₂)₃-O-(CH₂)₂-).

R^{b3} each independently is H or alkyl.

R^{b3} preferably is H or methyl, and more preferably H.

X^{b} is -O-, -Ph-, -N(-R^{E})-, or carbazolylene.
Here, R^{E} is an organic group.

However, when R^{b2} is H, then X^{b} is -Ph-.

X^{b} preferably is -O-, -Ph-, or carbazolylene, more preferably -O- or -Ph-, and still more preferably -O-.

R^{c} in formula (1) is H, methyl, a perfluoropolyether group-containing group, or) an organic group optionally having a hydroxyl group.

According to one embodiment of the invention, R^{c} is a monovalent-perfluoropolyether-group-containing monovalent group.

In this embodiment, the present copolymer contains a perfluoropolyether group at both ends, whereby particularly excellent water repellency can be obtained.

Examples of the "monovalent-perfluoropolyether-group-containing monovalent group" represented by R^{c} include a group containing a monovalent perfluoropolyether group capable of bonding via a linker.

The lower limit of the number average molecular weight of the monovalent perfluoropolyether group is preferably 500, 800, or 1000; more preferably 1500; and still more preferably 2000, from the viewpoint of achieving high oil repellency and/or water repellency.

The upper limit of the number average molecular weight of the monovalent perfluoropolyether group is preferably 100,000, more preferably 50,000, and still more preferably 10,000, from the viewpoint of achieving high solubility in general-purpose solvents (fluorine-free organic solvents).

The monovalent-perfluoropolyether-group-containing monovalent group is preferably a group of the formula R^{c'}-(C_{q}F_{2q}O)_{nc}-Y^{c}-L^{c}- (c1),Wherein R^{c'} is F or Rf^{c}-O- (Rf^{c} is C₁₋₈-perfluoroalkyl), q each independently is an integer of 1-6, nc is the number of repeating units of 1-1000,
Y^{c} is a C₁₋₆-perfluoroalkylene chain, and L^{c} isa linker.

The symbols in formula (c1) are explained below.

R^{c'} preferably is F or CF₃-O-.

The moieties of the formula C_{q}F_{2q}O repeated nc times may each be identical or different.

q preferably each independently is an integer of 2-3.

The moiety of formula (C_{q}F_{2q}O)_{nC} preferably comprises at least one structural unit selected from -CF₂-CF₂-CF₂-O-, -CF(-CF₃)-CF₂-O-, -CF₂-O-, -CF₂-CF₂-O-, and -CF(-CF₃)-O-.

nc is preferably 1-500, and more preferably 5-150.

Y^{c} preferably is a group of the formula - (CF₂)_{fc}-CF(-Z^{c})-(CF₂)_{gc}-, Wherein fc and gc each independently are an integer that is 0 or more, and (fc+gc) is an integer of 0-5, and Z^{c} is F or -CF₃.
Y^{c} more preferably is -CF₂-, -CF₂-CF₂-, or -CF(-CF₃)-.

In the moiety of the formula - (C_{q}F_{2q}O)_{nC}-, it is preferable that
(1) it comprises -CF₂-CF₂-CF₂-O-, and nc is 1-1000, and preferably 5-100;
(2) it comprises -CF₂-O- and -CF₂-CF₂-O-, and nc is 2-1000, and preferably 5-150;
(3) it comprises -CF(-CF₃)-CF₂-O-, and nc is 1-1000, and preferably 5-100; or
(4) it comprises -CF(-CF₃)-CF₂-O- and -CF₂-O-, and nc is 2-1000, and preferably 5-150.

In the moiety of the formula: R^{c'}-(C_{q}F_{2q}O)_{nC}-Y^{c}-, it is preferable that
(1) R^{c'} is F, the moiety of the formula (C_{q}F_{2q}O)_{nC} comprises -CF₂-CF₂-CF₂-O-, nc is 1-1000, and preferably 5-100, and Y^{c} is -CF₂-CF₂-;
(2) R^{c'} is CF₃-O-, the moiety of the formula (C_{q}F_{2q}O)_{nC} comprises - CF₂-O- and -CF₂-CF₂-O-, nc is 2-1000, and preferably 5-150, and Y^{c} is -CF₂-;
(3) R^{c'} is CF₃-O-, the moiety of the formula (C_{q}F_{2q}O)_{nC} comprises - CF(-CF₃)-CF₂-O-, nc is 1-1000, and preferably 5-100, and Y^{c} is - CF(-CF₃)-; or
(4) R^{c'} is CF₃-O-, the moiety of the formula (C_{q}F_{2q}O)_{nC} comprises - CF(-CF₃)-CF₂-O- and -CF₂-O-, nc is 2-1000, and preferably 5-150, and Y^{c} is -CF₂-.

L^{c} preferably is a linker with a backbone whose number of atoms is 1-6 (preferably 1-5, and more preferably 1).

This linker is preferably -CH₂-O-CH₂-CH₂- or -CH₂-, and more preferably -CH₂-.

The perfluoropolyether group-containing monovalent group represented by R^{c} particularly preferably represents a group represented by formula (c1) wherein
(1) R^{c'} is F, the moiety of the formula (C_{q}F_{2q}O)_{nC} comprises -CF₂-CF₂-CF₂-O-, nc is 1-1000, and preferably 5-100, Y^{c} is -CF₂-CF₂-, and L^{c} is -CH₂-O-CH₂-CH₂-;
(2) R^{c'} is CF₃-O-, the moiety of the formula (C_{q}F_{2q}O)_{nC} comprises - CF₂-O- and -CF₂-CF₂-O-, nc is 1-1000, and preferably 5-150, Y^{c} is - CF₂-, and L^{c} is -CH₂-O-CH₂-CH₂-;
(3) R^{c'} is CF₃-O-, the moiety of the formula (C_{q}F_{2q}O)_{nC} comprises - CF(-CF₃)-CF₂-O-, nc is 1-1000, and preferably 5-100, Y^{c} is -CF(-CF₃)-, and L^{c} is -CH₂-O-CH₂-CH₂-; or
(4) R^{c'} is CF₃-O-, the moiety of the formula (C_{q}F_{2q}O)_{nC} comprises - CF(-CF₃)-CF₂-O- and -CF₂-O-, nc is 1-1000, and preferably 5-150, Y^{c} is -CF₂-, and L^{c} is -CH₂-O-CH₂-CH₂.

According to another embodiment of the present invention, R^{c} preferably is an organic group optionally having a hydroxyl group. Examples thereof include alkanoyl and alkyl. Preferable examples include alkyl. still more preferable examples of R^{c} include methyl and H, and particularly preferable examples include H.

When R^{c} is an organic group having a hydroxyl group, the organic group is preferably a group having a hydroxyl group that is capable of bonding to X^{c} via a linker.

The linker above is preferably a linker with a backbone whose number of atoms is 1-6.

X^{c} in formula (1) is - O-, -S-, -NH-, or a single bond, and preferably -O- or -NH-.

In a preferable embodiment of the invention the present copolymer is represented by formula (1), wherein R^{c} is an organic group not having a hydroxyl group. However, at least one group R^{b2} is an organic group having a hydroxyl group.

### 3. Method for Producing a Fluorine-Containing Copolymer

The present copolymer can be produced by a method comprising the steps of:
(1) subjecting a cationic polymerizable monomer to cationic polymerization in the presence of a perfluoropolyether group-containing cationic polymerization initiator and a Lewis acid (step 1); and
(2) quenching the cationic polymerization reaction using a cationic polymerization terminator (step 2).

### 3.1. Step 1

### 3.1.1. Perfluoropolyether Group-Containing Cationic

### Polymerization Initiator

The perfluoropolyether group-containing cationic polymerization initiator (initiation species) used in step 1 is a cationic polymerization initiator containing a monovalent or divalent perfluoropolyether group.

Examples of the cationic polymerization initiator containing a monovalent perfluoropolyether group include a compound of formula (a):
R^{a1}-X^{a}-C(-R^{a2})(-R^{a3})-O-CO-R^{a4},
wherein
R^{a1} is a monovalent-perfluoropolyether-group-containing monovalent group,
X^{a} is -O-, -Ph-, or -N(-R^{E})- (R^{E} is an organic group),
R^{a2} is H or alkyl,
R^{a3} is H or alkyl, and
R^{a4} is alkyl or perfluoroalkyl,
with the proviso that R^{a2} or R^{a3} or both are alkyl, and
a compound of formula (b):
   R^{a1}-X^{a}-C(-R^{a2})(-R^{a3})-X^{c},
   wherein
   R^{a1} is a monovalent-perfluoropolyether-group-containing monovalent group,
   X^{a} is -O-, -Ph-, or -N(-R^{E})- (R^{E} is an organic group),
   R^{a2} is H or alkyl,
   R^{a3} is H or alkyl,
   with the proviso that R^{a2} or R^{a3} or both are alkyl, and
   X^{c} is halogen.

Examples of the cationic polymerization initiator containing a divalent perfluoropolyether group include
a compound of formula (c):
R^{a4}-CO-O-C(-R^{a2})(-R^{a3})-X^{a}-R^{a1}-X^{a}-C(-R^{a2})(-R^{a3})-O-CO-R^{a4},
wherein
R^{a1} is a divalent-perfluoropolyether-group-containing divalent group,
X^{a} is -O-, -Ph-, or -N(-R^{E})- (R^{E} represents an organic group),
R^{a2} is H or alkyl, and
R^{a3} is H or alkyl,
with the proviso that R^{a2} or R^{a3} or both are alkyl, and
R^{a4} is alkyl or monovalent perfluoroalkyl,
   and
a compound of formula (d):
   X^{c}-C(-R^{a2})(-R^{a3})-X^{a}-R^{a1}-X^{a}-C(-R^{a2})(-R^{a3})-X^{c},
   wherein
   R^{a1} is a divalent-perfluoropolyether-group-containing divalent group,
   X^{a} is -O-, -Ph-, or -N(-R^{E})- (R^{E} is an organic group),
   R^{a2} is H or alkyl,
   R^{a3} is H or alkyl, and
   X^{c} is halogen,
   with the proviso that R^{a2} or R^{a3} or both are alkyl.

Specific examples of the cationic polymerization initiator containing a monovalent perfluoropolyether group include the following compounds: 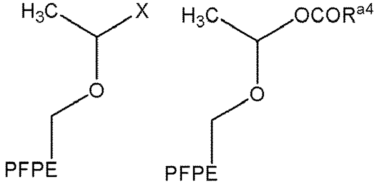 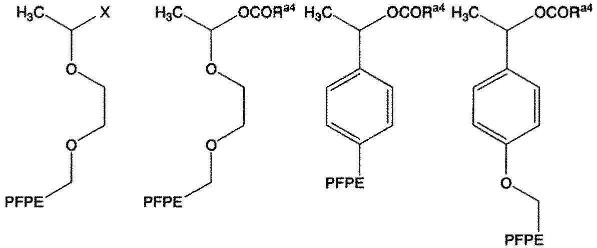 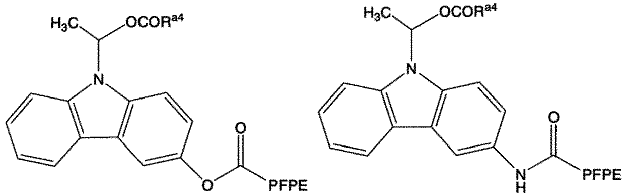 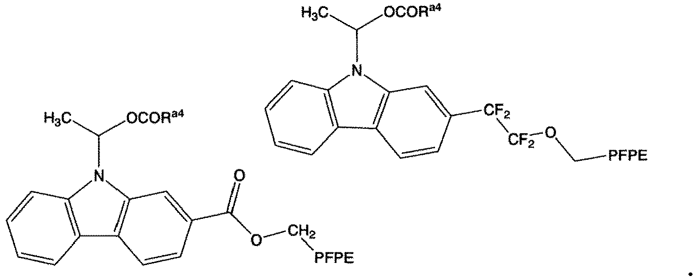 In these formulas, PFPE represents a monovalent perfluoropolyether chain (preferably F- (CF₂-CF₂-CF₂-O)ₙ-CF₂-CF₂- (n is the number of repeating units)), and X is halogen. Other symbols are as defined above.

Specific examples of the cationic polymerization initiator containing a divalent perfluoropolyether group include the following compounds: 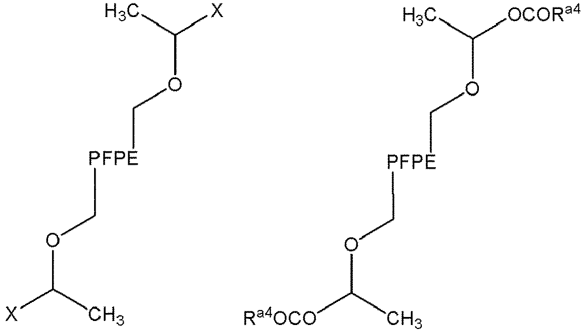 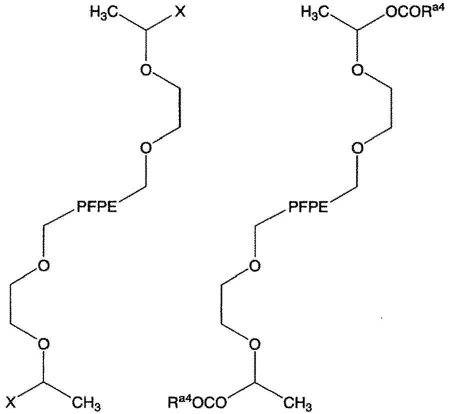 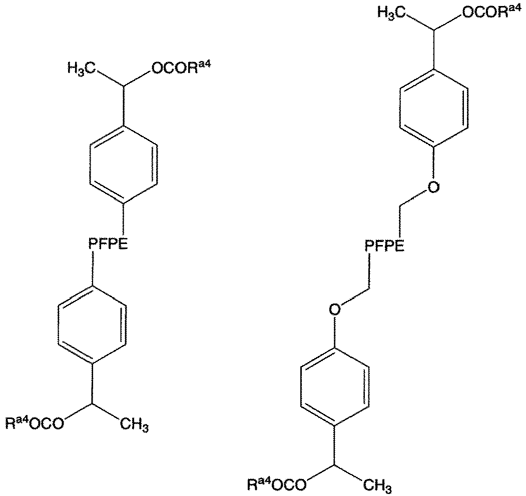 In these formulas, PFPE is a divalent perfluoropolyether group (preferably
(i) -CF(-CF₃)- (O-CF₂-CF(-CF₃))_{n'}-O-CF₂-Rf-CF₂-O-(CF(-CF₃)-CF₂O-)ₙ-CF(-CF₃)-, wherein Rf is a perfluoroalkylene chain, and n and n' each independently is the number of repeating units, or
(ii) -CF₂CF₂O-(CF₂CF₂CF₂O)ₙ-CF₂CF₂-, wherein n is the number of repeating units).
Other symbols are as defined above.

The perfluoropolyether group-containing cationic polymerization initiator is preferably 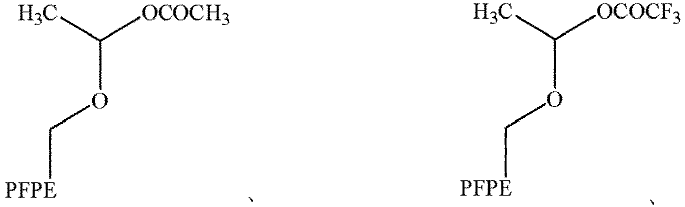 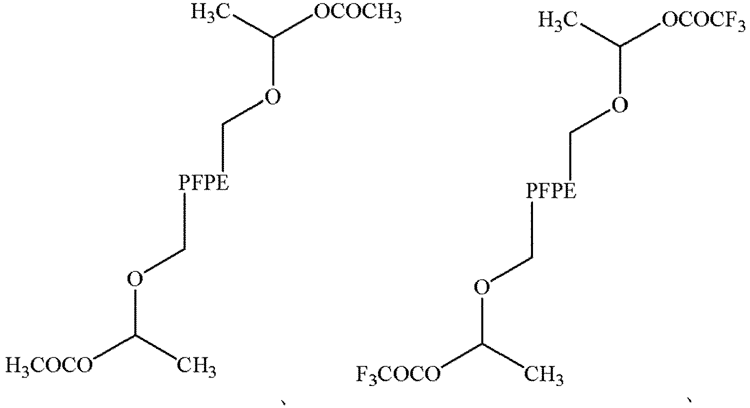 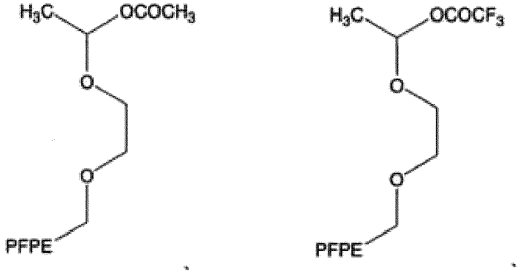 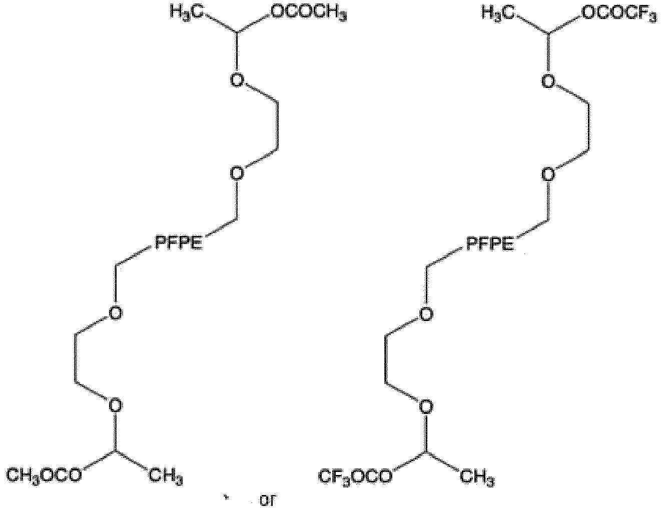 (the symbols in these formulas are as defined above), and more preferably 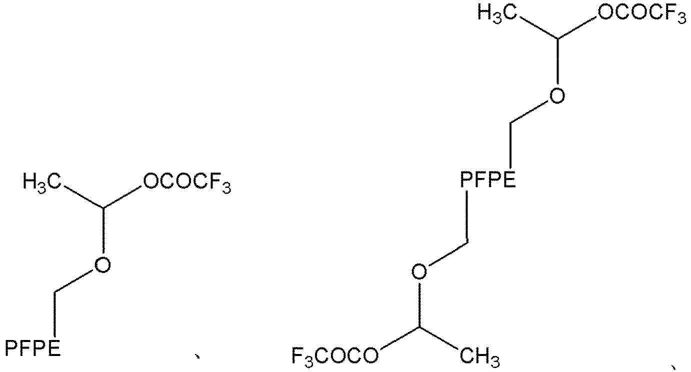 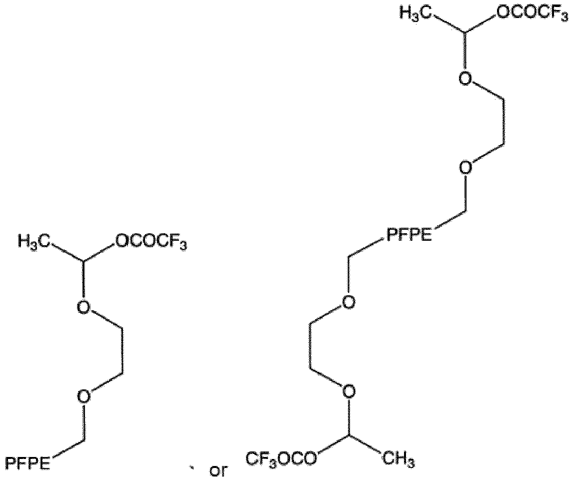 (the symbols in these formulas are as defined above).

When the perfluoropolyether group-containing cationic polymerization initiator is a cationic polymerization initiator containing a monovalent perfluoropolyether group, this compound can be produced by reacting [3-poly(perfluoropropyloxy)-2,2,3,3-tetrafluoropropoxy]ethoxy vinyl ether of the formula F-(CF₂-CF₂-CF₂-O)ₙ-CF₂-CF₂-CH₂O-C₂H₄O-CH=CH₂ (n is the number of repeating units) with an organic carboxylic acid (preferably acetic acid or trifluoroacetic acid, and more preferably trifluoroacetic acid) or a hydrogen halide.

For example, a compound of the formula: 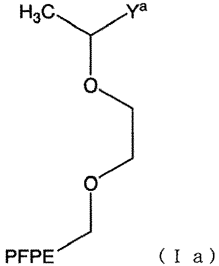 wherein
PFPE is F-(CF₂-CF₂-CF₂-O)ₙ-CF₂-CF₂- (n is the number of repeating units), and
Y^{a} is acyloxy (e.g., CF₃COO) or halogen, can be produced by a method comprising the step of reacting 2-poly(perfluoropropyloxy)methoxyethoxy vinyl ether (a vinyl ether compound a) of the formula: PFPE-CH₂-O-C₂H₄O-CH=CH₂ (the symbols in the formula are as defined above) with
a compound of the formula: Y^{a}-H (the symbols in the formula are as defined above) (preferably CF₃COOH).

In a similar manner, a compound represented by the formula: 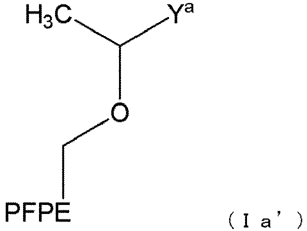 wherein
PFPE is F-(CF₂-CF₂-CF₂-O)ₙ-CF₂-CF₂- (n is the number of repeating units), and
Y^{a} is acyloxy or halogen,
can be produced by a production method comprising the step of reacting
2-poly(perfluoropropyloxy)methoxy vinyl ether of the formula PFPE-CH₂-O-CH=CH₂ (the symbols in the formula are as defined above) with a compound of the formula:
   Y^{a}-H (the symbols in the formula are as defined above) (preferably CF₃COOH).

In contrast, when the perfluoropolyether group-containing cationic polymerization initiator is a cationic polymerization initiator containing a divalent perfluoropolyether group, this compound can be produced by reacting a compound of the formula CH₂=CH-O-CH₂-CH₂-O-CH₂-CF(-CF₃)- (O-CF₂-CF(-CF₃))ₙ-O-CF₂-Rf-CF₂-O-(CF(-CF₃)-CF₂-O-)_{n'}-CF(-CF₃)-CH₂O-C₂H₄O-CH=CH₂ (wherein Rf is a perfluoroalkylene chain, and n and n' each independently is the number of repeating units) with an organic carboxylic acid (preferably acetic acid, trifluoroacetic acid (CF₃COOH), and more preferably trifluoroacetic acid) or a hydrogen halide.

For example, a compound ofthe formula: 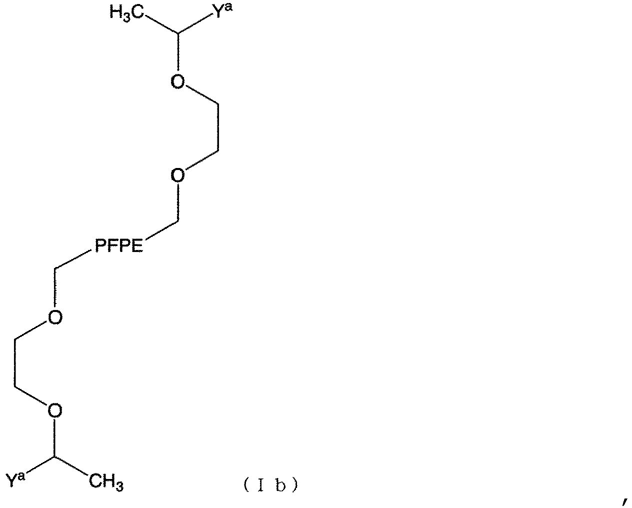 wherein
PFPE is -CF (-CF₃)- (O-CF₂-CF(-CF₃)) ₙ-O-CF₂-Rf-CF₂-O-(CF (-CF₃)-CF₂-O-)_{n'}-CF(CF₃)- (Rf is perfluoroalkylene, and n and n' each independently is the number of repeating units), and
Y^{a} is acyloxy (e.g., CF₃COO) or halogen, can be produced by a method comprising the step of reacting a vinyl compound of the formula CH₂=CH-O-C₂H₄-O-CH₂-PFPE-CH₂-O-C₂H₄-O-CH=CH₂ (the symbols in the formula are as defined above) (a vinyl ether compound b) with a compound of the formula: Y^{a}-H (the symbols in the formula are as defined above) (preferably CF₃COOH).

Further, for example, a compound of the formula: 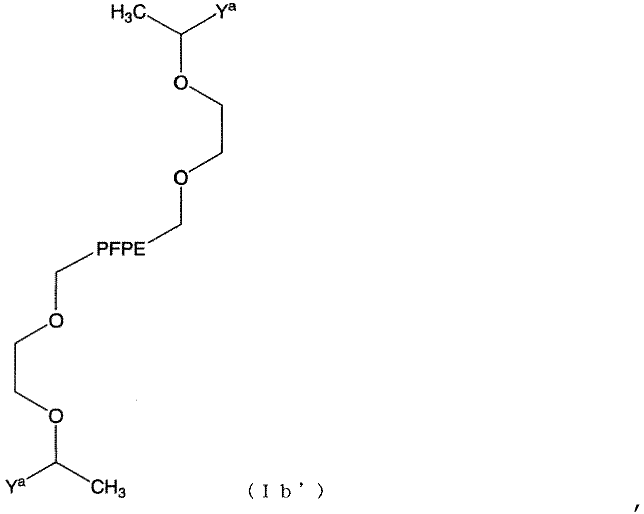 wherein
PFPE is -CF₂CF₂-O-(CF₂-CF₂CF₂-O)ₙ-CF₂-CF₂- (n is the number of repeating units), and
Y^{a} is acyloxy or halogen, can be produced by a method comprising the step of reacting a compound of the formula CH₂=CH-O-C₂H₄-O-CH₂-PFPE-CH₂-O-C₂H₄-O-CH=CH₂ (the symbols in the formula are as defined above) with a compound of the formula: Y^{a}-H (the symbols in the formula are as defined above) (preferably CF₃COOH).

In a similar manner, a compound of the formula: 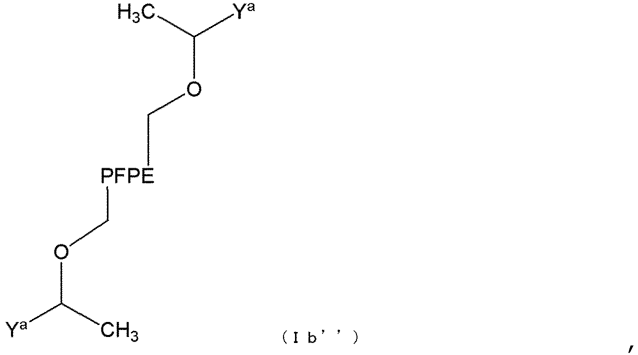 wherein
PFPE is -CF₂CF₂-O-(CF₂-CF₂CF₂-O)ₙ-CF₂-CF₂- (n is the number of repeating units), and
Y^{a} is acyloxy or halogen, can be produced by a method comprising the step of reacting a compound of the formula CH₂=CH-O-CH₂-PFPE-CH₂-O-CH=CH₂ (the symbols in the formula are as defined above) with
a compound of the formula Y^{a}-H (the symbols in the formula are as defined above) (preferably CF₃COOH).

These reactions are preferably performed in a solvent that does not adversely affect the reaction, in the presence of an acid.

Such an acid is preferably a mineral acid, such as hydrochloric acid. The amount of the acid used is usually 0.01-1000 moles, per mole of the vinyl ether compound a or the vinyl ether compound b.

Such a solvent is preferably a fluorine-containing solvent, such as HCFC-225.

The reaction temperature is usually -78 to 50°C, and preferably -10 to 10°C.

The reaction time is usually 1-60 minutes.

Such a cationic polymerization initiator corresponds to the moiety of the formula: 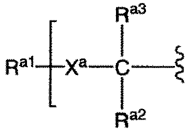 (the symbols in the formula are as defined above) in formula (1), which is the fluorine-containing copolymer of the present invention.

When R^{a1} is a divalent group, this moiety actually has a structure of the formula:

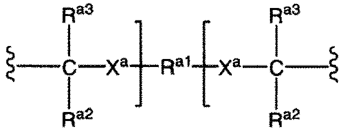

The concentration of the perfluoropolyether group-containing cationic polymerization initiator in the reaction system in step 1 is preferably 0.1-1000 mM, and more preferably 1-100 mM.

### 3.1.2. Cationic Polymerizable Monomer

The cationic polymerizable monomer used in step 1 is a monomer corresponding to the structural unit -CH(R^{b1})-C(R^{b3})(X^{b}-R^{b2})-.

For example, a fluorine-containing copolymer in which the moiety of the formula - [CH(R^{b1})-C(R^{b3})(X^{b}-R^{b2})]ₙ₁-(below, this moiety may be referred to as "moiety (b)") is present is synthesized by using the method for producing a fluorine-containing copolymer, a compound of the formula: 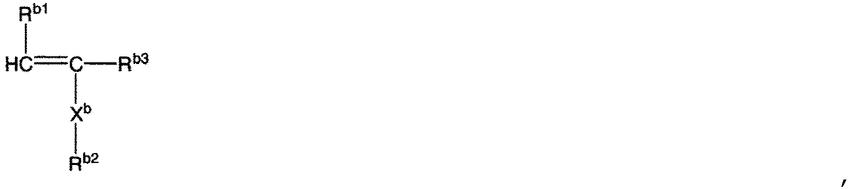 Wherein R^{b2} is an organic group having a hydroxyl group, and the other symbols in the formula are as defined above, is used as a cationic polymerizable monomer.

Preferable examples of the monomer corresponding to the above structural unit include the following compounds in which the hydroxyl group is protected.

A vinyl ether compound containing one or more protected hydroxyl groups (preferably one protected hydroxyl group).

Example (1) of this vinyl ether compound:
a compound of the formula: 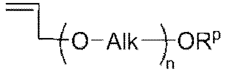 wherein Alk is a C₁₋₆-alkylene chain, n is the number of repeating units as a number of 1-6, and R^{p} is a protecting group.

Examples of the protecting group include acetyl.

Specific examples of Example (1) of the vinyl ether compound include:

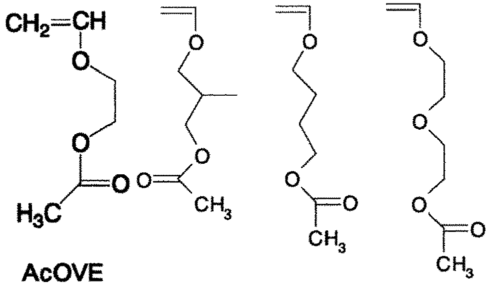

When these vinyl ether compounds are used, a hydroxyl group or hydroxyl groups can be introduced into the fluorine-containing copolymer of the present invention by deprotecting the protected hydroxyl group(s), as desired, after the polymerization reaction.

Preferable examples of the monomer further include the following compounds having a hydroxyl group:
For example, when a fluorine-containing copolymer in which the moiety (b) consists only of the structural unit M is synthesized, a compound of the formula: 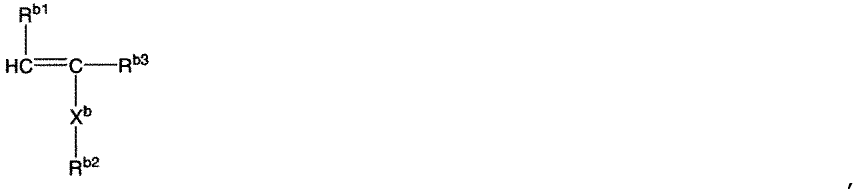 wherein R^{b2} is H or an organic group not having a hydroxyl group, and other symbols are as defined above (below, this compound may be referred to as "cationic polymerizable monomer M") is used as a cationic polymerizable monomer.

When a fluorine-containing copolymer in which the moiety (b) consists of the structural unit B and the structural unit M is synthesized, the cationic polymerizable monomer B and the cationic polymerizable monomer M are used.

Preferable examples of the monomer corresponding to the structural unit Q^{m} include the following compounds that do not have a hydroxyl group.

A compound of the formula CH₂=CH-O-R (a), Wherein R is a monovalent organic group, with the proviso that the monovalent organic group does not have a hydroxyl group.

Examples of such a compound include the following compounds:
(i) A vinyl ether compound of the formula: 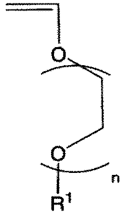 Wherein n is an integer of 1-10, and R¹ is alkyl.
   Specific examples of this vinyl ether compound include: 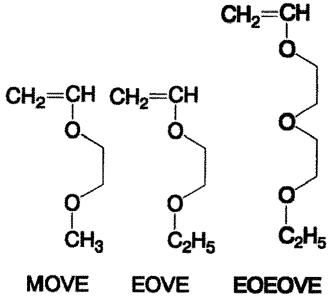
(ii) A vinyl ether compound of the formula: 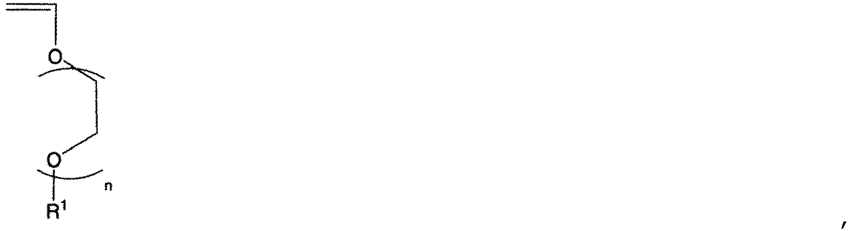 Wherein n is an integer of 1-10, and R¹ is alkyl substituted with one or more fluorine atoms.
   Specific examples of this vinyl ether compound include: 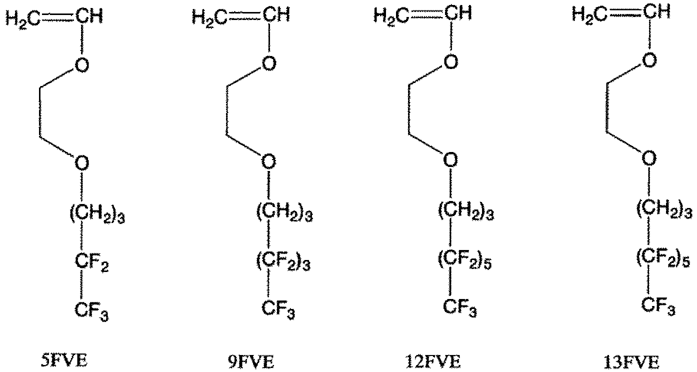 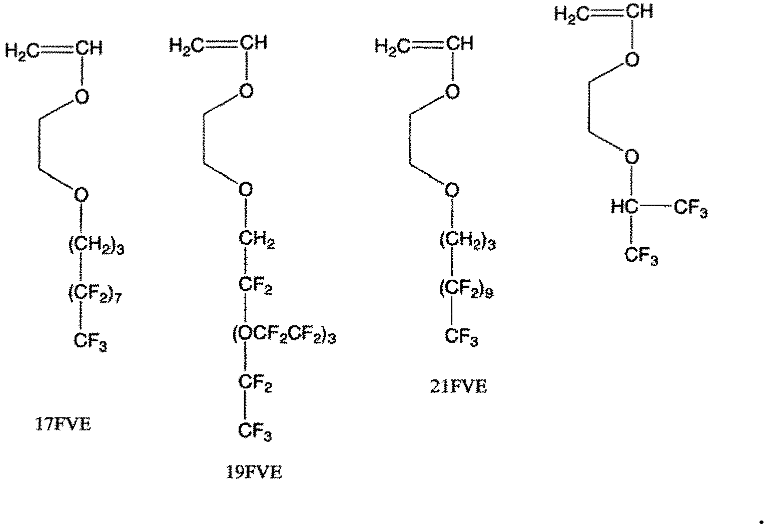 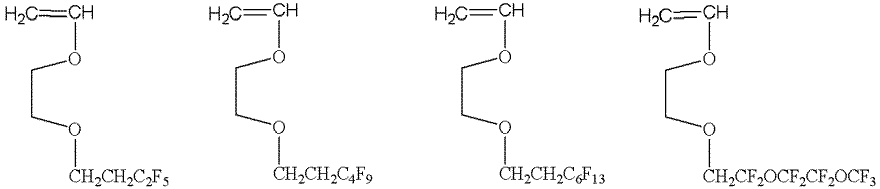 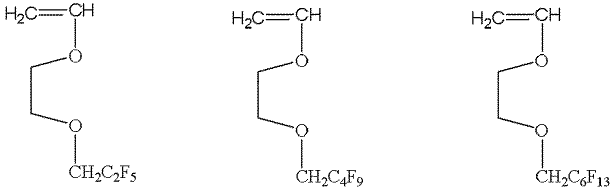 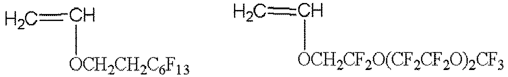
(iii) A vinyl ether compound containing at least one ring selected from mono-, bi-, tri- and tetracyclic rings.
   Specific examples of this vinyl ether compound include: 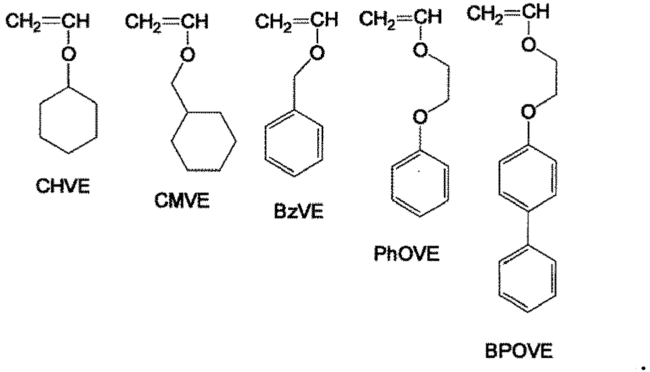 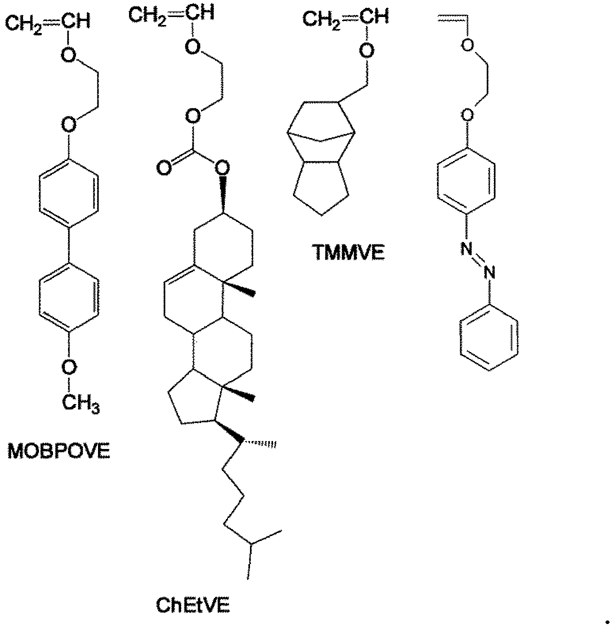
(iv) An aryl vinyl derivative of the formula: 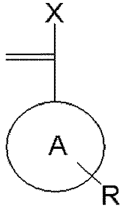 wherein
   X is H or methyl,
   ring A is benzene or naphthalene,
   R is hydrogen, halogen, or a monovalent organic group,
   with the proviso that the monovalent organic group contains none of an -OH group, a -COOH group, or an -NH₂ group.
      Specific examples of this aryl vinyl derivative include: 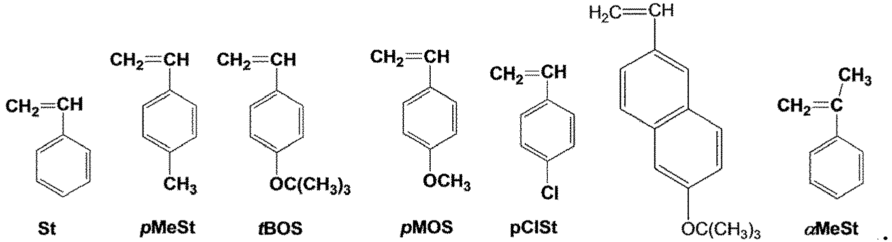
(v) Other compounds:

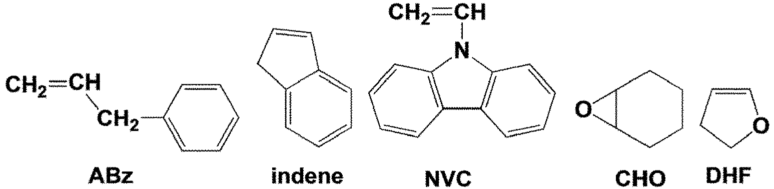

For example, when a fluorine-containing copolymer in which the moiety (b) consists of the structural units B and M is synthesized, the cationic polymerizable monomer B and the cationic polymerizable monomer M are used as cationic polymerizable monomers.

Here, when a fluorine-containing copolymer in which the structural units B and M each forming a block in the moiety (b) is synthesized, the cationic polymerizable monomers B and M are sequentially subjected to cationic polymerization.

Specifically, only a first cationic polymerizable monomer (the cationic polymerizable monomer B or M) is added to a reaction system to initiate a polymerization reaction, and after the completion of the polymerization reaction, a second cationic polymerizable monomer (the cationic polymerizable monomer M or B) is added to the resulting reaction solution; in this case, the cation is always present at the end of the polymer while living cationic polymerization proceeds, enabling the polymerization reaction of the second cationic polymerizable monomer to proceed.

In contrast, when a fluorine-containing copolymer in which the structural units B and M are randomly linked to each other in the moiety (b) is synthesized as the fluorine-containing copolymer of the present invention, both of the cationic polymerizable monomers B and M are added to a reaction system to initiate a polymerization reaction.

The cationic polymerizable monomers B and M may be commercially available products, or can be produced by known methods.

The amount of the cationic polymerizable monomer used is suitably determined according to the structure of the target fluorine-containing copolymer.

In this production method, living cationic polymerization is used; thus, it is possible to highly accurately control the number of repeating structural units derived from the cationic polymerizable monomers.

### 3.1.3. Lewis Acid

Examples of the Lewis acid used in step 1 include compounds of formulae (A1) and (A2) shown below.

An aluminum compound represented by AlY¹Y²Y³ (A1), Wherein Y¹-Y³ each independently are halogen, alkyl, aryl, alkoxy, or aryloxy. Examples of the halogen include Cl, Br and I, examples of the alkyl include C₁₋₁₀-alkyl, examples of the aryl include C₆₋₁₀-aryl, examples of the alkoxy include C₁₋₁₀-alkoxy, and examples of the aryloxy include C₆₋₁₀-aryloxy.

Specific examples of the aluminum compound of formula (A1) include organic aluminum halide compounds, such as diethyl aluminum chloride, diethyl aluminum bromide, diethyl aluminum fluoride, diethyl aluminum iodide, diisopropyl aluminum chloride, diisopropyl aluminum bromide, diisopropyl aluminum fluoride, diisopropyl aluminum iodide, dimethyl aluminum sesquichloride, methyl aluminum chloride, ethyl aluminum dichloride, ethyl aluminum dibromide, ethyl aluminum difluoride, ethyl aluminum diiodide, isobutyl aluminum dichloride, octyl aluminum dichloride, ethoxy aluminum dichloride, vinyl aluminum dichloride, phenyl aluminum dichloride, ethyl aluminum sesquichloride, ethyl aluminum sesquibromide, aluminum trichloride, aluminum tribromide, ethyl aluminum ethoxy chloride, butyl aluminum butoxy chloride, and ethyl aluminum ethoxy bromide;
dialkoxyalkyl aluminum, such as diethoxyethylaluminum; bis(alkyl-substituted allyloxy)alkyl aluminum, such as bis(2,6-di-t-butylphenoxy)methyl aluminum and bis(2,4,6-tri-t-butylphenoxy)methyl aluminum. These aluminum compounds may be used alone, or in a combination of two or more.

A tetravalent titanium or tetravalent tin compound represented by MZ¹Z²Z³Z⁴ (A2), wherein M is tetravalent Ti or Sn, and Z¹-Z⁴ each independently are halogen, alkyl, aryl, alkoxy, or aryloxy.

Examples of the halogen, alkyl, aryl, alkoxy, and aryloxy represented by Z¹-Z⁴ include the same as those that are shown as examples in terms of Y¹-Y³.

Specific examples of the tetravalent titanium compound of formula (A2) include titanium halides, such as titanium tetrachloride, titanium tetrabromide, and titanium tetraiodide; titanium alkoxide halides, such as titanium triethoxy chloride and titanium tri n-butoxide chloride; and titanium alkoxides, such as titanium tetraethoxide and titanium n-butoxide.

Specific examples of the tetravalent tin compound represented by formula (A2) include tin halides, such as tin tetrachloride, tin tetrabromide, and tin tetraiodide.

These tetravalent titanium compounds and tetravalent tin compounds may be used alone, or in a combination of two or more.

Further, examples of the Lewis acid include halides of iron (Fe), gallium (Ga), indium (In), zinc (Zn), zirconium (Zr), hafnium (Hf), bismuth (Bi), silicon (Si), germanium (Ge), or antimony (Sb); onium salts (e.g., ammonium salt, phosphonium salt) ; and metal oxides (e.g., Fe₂O₃, Fe₃O₄, In₂O₃, Ga₂O₃, ZnO, and Co₃O₄).

The amount of the Lewis acid used is preferably an amount such that the cationic polymerizable monomer/the Lewis acid (molar ratio) is 2-1000, and more preferably 10-1000.

### 3.1.4. Growing Species-Stabilizing Agent

In step 1, in order to stabilize a growing species in the living cationic polymerization, an oxygen- or nitrogen-containing compound may be used.

The growing species as used herein refers to an activated species (cation) present at the end of a growing polymer.

Examples of the oxygen- or nitrogen-containing compound include esters, ethers, ketones, imides, phosphate compounds, pyridine derivatives, and amines. Specifically, examples of the ester include ethyl acetate, butyl acetate, phenyl acetate, methyl chloroacetate, methyl dichloroacetate, ethyl butyrate, ethyl stearate, ethyl benzoate, phenyl benzoate, diethyl phthalate, and diethyl isophthalate.

Examples of the ether include chain ethers, such as diethyl ether and ethylene glycol; and cyclic ethers, such as dioxane and tetrahydrofuran. Examples of the ketone include acetone and methyl ethyl ketone.

Examples of the imide include ethyl phthalimide.

Examples of the phosphate compound include triethyl phosphate.

Examples of the pyridine derivative include 2,6-dimethyl pyridine.

Examples of the amine include tributylamine.

These compounds may be used alone, or in a combination of two or more.

The amount of the oxygen- or nitrogen-containing compound used is preferably 0.1-2000 moles, and more preferably 1-2000 moles, per mole of a Lewis acid.

The reaction may be carried out in bulk; however, it is preferable to use a solvent.

Examples of the solvent include aliphatic hydrocarbons, such as n-pentane, n-hexane, and cyclohexane; aromatic hydrocarbons, such as benzene, toluene, and xylene; halogenated hydrocarbons, such as carbon tetrachloride, methylene chloride, and dichloroethane; and ethers, such as dimethyl ether. In particular, a non-polar solvent is preferable. These solvents may be used alone, or in a combination of two or more.

The amount of the solvent used is usually such that the solvent:the vinyl compound (volume ratio) is (1:1)-(100:1), and preferably (5:1)-(30:1).

The reaction temperature is usually -80 to 150°C, and preferably -78 to 80°C.

The reaction time is usually 1 minute to 1 month, and preferably 1 minute to 100 hours.

### 3.2. Step 2

### 3.2.1. Cationic Polymerization Terminator

The cationic polymerization terminator used in step 2 may be a compound represented by the formula: R^{c}-X^{c}-H (the symbols in the formula are as defined above).

When R^{c} is H, a preferable example of the cationic polymerization terminator is water.

When R^{c} is H, another preferable example of the cationic polymerization terminator is LiBH₄.

When R^{c} is methyl, a preferable example of the cationic polymerization terminator is methanol.

The amount of the cationic polymerization terminator used is not strictly defined as long as the terminator sufficiently contacts the reactive end of the polymer in a reaction solution.

The amount is usually 0.01-10 times, and preferably 0.1-1 times the volume of the reaction solvent.

### 3.3. Other Step

The thus-obtained present copolymer may be optionally purified by a commonly used method.

The present copolymer produced by the production method described above has a highly uniform molecular weight. For example, the polydispersity (weight average molecular weight/number average molecular weight) is within the range of about 2.5-1.0.

### 5. Application

The present copolymer has applications, such as in coating compositions, coating, leveling agents, and surface modifiers (e.g., to add water repellency, oil repellency, antifouling properties, surface smoothness, and friction resistance).

### 6. Composition

The present invention also provides a composition ("the present composition") containing the present copolymer. In a preferable embodiment, the composition contains, in addition to the present copolymer, a compound containing a group reactive with t a hydroxyl group. The "group reactive with a hydroxyl group" can be understood from the foregoing description in this specification.

The present invention also provides a composition containing the present copolymer, and a compound containing a group having reactivity with a hydroxyl group. The "compound containing a group having reactivity with a hydroxyl group" can be understood from the foregoing description in this specification. The composition may contain other components. Examples of other components include compounds containing the functional group A other than the present copolymer.

The composition has applications, such as in coating compositions, coating, and surface modifiers (e.g., to add water repellency, oil repellency, antifouling properties, surface smoothness, and friction resistance). The present composition contains the present copolymer. It is sufficient if the present composition contains the present copolymer as the main component or active component. The "main component" refers to a component whose content in the composition is more than 50 wt%. The "active component" refers to a component that directly or indirectly brings about an effect of the composition of the present invention for intended use. Specifically, the "active component" refers to, for example, a component that remains on a substrate to be surface-treated, forms a film (surface-treated layer), and brings about the effects of the present invention (e.g., to add water repellency, oil repellency, antifouling properties, surface smoothness, and friction resistance).

The present composition or the present copolymer is applied to the surface of an object (target article) to form a coating film, and imparts properties, such as water repellency, oil repellency, antifouling properties, surface smoothness, and/or friction resistance, to the surface. The present composition or the present copolymer is also applied to the surface of an object to form a coating film, and thus imparts water repellency to the surface. Thus, the present composition or the present copolymer is applied to the surface of an object for the purpose of water repellency, oil repellency, antifouling, and/or prevention of fingerprints. The formulation of the present composition can be suitably determined in accordance with desired functions.

The present copolymer, in the coating film, may be bound to the compound containing a group reactive with each functional group A.

Specifically, the present invention also provides a polymer having:
(1) at least one structural unit derived from the present copolymer, and
(2) at least one structural unit derived from a compound containing a group having reactivity with a hydroxyl group.

Additionally, the present invention also provides an article containing the polymer.

The present composition may also contain, in addition to the present copolymer, a fluoropolyether compound, which is considered to be a fluorine-containing oil, preferably a perfluoropolyether compound (which may be hereinafter referred to as a "fluorine-containing oil" to distinguish it from the present copolymer). The fluorine-containing oil contains no site reactive with a substrate (e.g., silyl group). The fluorine-containing oil contributes to the improvement of surface smoothness of the coating film obtained.

The fluorine-containing oil may be present in an amount of, for example, 0-300 parts by mass (pbm), and preferably 50-200 pbm, per 100 pbm of a perfluoropolyether group-containing silane compound (when two or more compounds are combined, the total amount; the same applies hereinafter) in the composition.

The fluorine-containing oil includes a compound of the following formula (2) (a perfluoropolyether compound).

R²¹-(OCᵣF₂ᵣ)_{nd}-O-R²² ... (2)

wherein R²¹and R²² each independently represent a C₁₋₁₆perfluoroalkyl group, and preferably a C₁₋₃-perfluoroalkyl group; r each independently is an integer of 1-3; and the moiety of the formula -(OCᵣF₂ᵣ)_{nd}- comprises at least one structural unit selected from OC₃F₆, OC₂F₄, and OCF₂. Specifically, the moiety of the formula - (CᵣF₂ᵣO)_{nd}- is represented by formula - (OC₃F₆)_{a'}-(OC₂F₄)_{b'}-(OCF₂)_{c'}-.

The alphabetical symbols "a'," "b'," and "c'" each represent the number of repeating units of the corresponding perfluoropolyether that constitutes the main skeleton of the polymer, and independently represent an integer of 0-300; i.e., the sum of a', b', and c' (or "nd") is at least 1, and preferably 1-100.

In this specification, the order of the repeating units in adjacent parentheses with the number of repeating units in subscript is arbitrary. Specifically, the union of these repeating units may be at random, or in a block form. Of these repeating units, the repeating unit -(OC₃F₆)- may be -(OCF₂CF₂CF₂)-, -(OCF(CF₃)CF₂)-, or-(OCF₂CF(CF₃))-, and is preferably -(OCF₂CF₂CF₂)-. The repeating unit-(OC₂F₄)- may be -(OCF₂CF₂)- or -(OCF(CF₃))-, and is preferably -(OCF₂CF₂)-.

Examples of the perfluoropolyether compound offormula (2) include the following compounds of formulas (2a), (2b), or (2c) .

R²¹-(OCFCFCF)_{a"}-O-R²² ... (2a)

R²¹-(OCF₂CF₂)_{b"}-(OCF₂)_{c"}-O-R²² ... (2b)

R²¹-(OCF(CF₃)CF₂)_{d"}-O-R²² ... (2c)

wherein R²¹and R²² are as defined as above: a" is an integer of 1 or more and 100 or less; b'' and c'' each independently represent an integer of 1-300; and d'' is an integer of 1-100.

The compounds of formula (2a) and (2b) may each be used alone, or in combination. When these compounds are combined for use, the mass ratio of the compound of formula (2a) to the compound of formula (2b) is preferably (1:1)-(1:30). The use of these compounds with the mass ratio within this range results in a coating film that has an excellent balance between surface smoothness and friction resistance.

The fluorine-containing oil may have a number average molecular weight of 1000-30000. This leads to high surface smoothness of a coating film formed from the present composition (this coating film can be a surface-treated layer of an article to which the present composition has been applied). Typically, the compound of formula (2a) preferably has a number average molecular weight of 2000-6000, and the compound of formula (2b) preferably has a number average molecular weight of 8000-30000. The use of these compounds having a number average molecular weight within these ranges can provide a coating film with high surface smoothness.

The present composition may also contain, in addition to the present copolymer, a silicone compound, which is considered to be silicone oil (which is hereinafter referred to as "silicone oil"). The silicone oil contributes to the improvement of surface smoothness.

Silicone oil may be present in an amount of, for example, 0-300 pbm, and preferably 50-200 pbm, per 100 pbm of the perfluoropolyether group-containing silane compound in the present composition.

Silicone oil for use is, for example, linear or cyclic silicone oil having 2000 or fewer siloxane bonds. Linear silicone oil may be straight silicone oil or modified silicone oil. Examples of straight silicone oil include dimethyl silicone oil, methyl phenyl silicone oil, and methyl hydrogen silicone oil. Modified silicone oil includes those obtained by modifying straight silicone oil with alkyl, aralkyl, polyether, higher fatty acid ester, fluoroalkyl, amino, epoxy, carboxyl, alcohol, or the like. Examples of cyclic silicone oil include cyclic dimethyl siloxane oil.

The coating film of the present composition can be formed by coating the surface of an object with a solution obtained by dissolving the present composition in a solvent by a commonly used method, such as roll coating, gravure coating, microgravure coating, flow coating, bar coating, spray coating, die coating, spin coating, dip coating, or vapor-deposition; drying the object; and optionally subjecting the object to UV irradiation.

To give hardness to the coating film or increase the curing rate, a monofunctional or polyfunctional (meth)acrylate monomer may be suitably added for the purpose of improving the adhesion of the film with the base. Because the present copolymer is highly compatible with a monofunctional or polyfunctional (meth)acrylate monomer, the added monomer functions as a crosslinking agent, resulting in a cured film with suitable hardness, with improvement in the adhesion to the substrate and the curing rate without impaired appearance.

Because the present copolymer is highly soluble not only in a fluorine-containing organic solvent but also in a fluorine-free organic solvent, which is a general-purpose solvent, the present copolymer dissolved in a fluorine-containing organic solvent or fluorine-free organic solvent can be applied to the surface of the target article.

Examples of such a fluorine-containing organic solvent include perfluorohexane, perfluorooctane, perfluorodimethyl cyclohexane, perfluorodecalin, perfluoroalkyl ethanol, perfluorobenzene, perfluorotoluene, perfluoroalkyl amine (e.g., Fluorinert (trade name)), perfluoroalkyl ether, perfluorobutyl tetrahydrofuran, hydrofluoroether (e.g., Novec (trade name), HFE-7100), perfluoroalkyl bromide, perfluoroalkyl iodide, perfluoropolyether (e.g., Krytox (trade name), Demnum (trade name), Fomblin (trade name)) 2-(perfluoroalkyl)ethyl methacrylate, 2-(perfluoroalkyl)ethyl acrylate, perfluoroalkyl ethylene, chlorofluorocarbon 134a, and hexafluoropropene oligomers.

Examples of such a fluorine-free organic solvent include methyl ethyl ketone, methyl isobutyl ketone, propylene glycol monomethyl ether, pentane, hexane, heptane, octane, dichloromethane, chloroform, carbon tetrachloride, dichloroethane, carbon disulfide, benzene, toluene, xylene, nitrobenzene, diethyl ether, dimethoxyethane, diglyme, triglyme, ethyl acetate, butyl acetate, dimethyl formamide, dimethyl sulfoxide, acetone, 2-butanone, acetonitrile, benzonitrile, butanol, 1-propanol, 2-propanol, ethanol, methanol, triethyl amine, and aniline.

Of these, the solvent to dissolve the present copolymer is preferably methyl ethyl ketone, methyl isobutyl ketone, propylene glycol monomethyl ether, hexadecane, butyl acetate, acetone, ethyl acetate, or 2-propanol.

These solvents may be used singly, or in any combination of two or more. The present copolymer is highly soluble even in a fluorine-free organic solvent, which is a general-purpose solvent. As understood from above description, the present composition can contain a solvent.

Examples of the material (substrate) of the article to which the present composition or the present copolymer is applied include inorganic materials, such as glass; polyolefin resins, such as polyethylene and polystyrene; synthetic resins, such as acrylic resins (e.g., polymethyl methacrylate), polyester resins (e.g., polyarylate and polyethylene terephthalate), polycarbonate resin, and phenolic resin; and metals, such as iron, aluminum, and copper.

Of these, glass, amorphous synthetic resins (e.g., acrylic resin), highly heat-resistant cyclic polyolefin resin (COP) or polyester resin (e.g., polyethylene terephthalate (PET) resin and polyethylene naphthalate (PEN) resin), and polycarbonate resin are preferable.

The present copolymer may also be added to e.g. a commercially available coating composition, a coating agent or a surface treatment agent for use.

The present copolymer, due to its high compatibility, can impart high water repellency and/or antifouling properties to the surface of an article without impairing the physical properties of such a commercially available coating composition, coating agent, or surface treatment agent.

The coating film formed from the present composition or the present copolymer is excellent in water repellency, oil repellency, antifouling properties, prevention of fingerprints, and durability; and can firmly bind to the target object, while exhibiting transparency. Thus, the present composition or the present copolymer can suitably be used in a variety of articles (products, devices, or components).

The present invention also encompasses articles having a coating film containing the present composition or the present copolymer.

The following describes in more detail such an article ("the present article") having a coating film formed from the present composition or the present copolymer.

The present article comprises a substrate and a layer formed on the surface of the substrate from the present copolymer, or an oil-repellent and/or water-repellent coating agent (which are hereinafter collectively referred to as simply "oil-repellent and/or water-repellent coating agent") (surface-treated layer).

Such an article can be produced, for example, as described below.

When the article to be produced is, for example, an optical component, the substrate for the component may be an optical component material, such as glass or transparent plastics. The surface region on which a surface-treated layer is to be formed from the present composition or the present copolymer may have a layer, such as a coating layer and/or an antireflection layer. The antireflection layer may be a monolayered antireflection film, or a multilayered antireflection film. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. These inorganic substances may be used alone, or in any combination of two or more (e.g., as a mixture). The antireflection layer in the form of a multilayered antireflection film preferably includes SiO₂ and/or SiO in its outermost layer. When the article to be produced is an optical glass component for touch-screen tablets, a thin film containing transparent electrodes, such as indium tin oxide (ITO) or indium zinc oxide, may be provided on part of the surface of the substrate (glass). The substrate may also be provided with an insulated layer, an adhesive layer, a protective layer, a decorative frame layer (I-CON), an atomized film layer, a hard coating film layer, a polarizing film, a phase-difference film, a liquid-crystal-display module, etc., depending on the specifications.

The shape of the substrate is not particularly limited. The surface region of the substrate on which a surface-treated layer is to be formed may be at least part of the surface of the substrate, and the shape of the substrate can be suitably determined depending on the intended use, specifications, or the like of the article to be produced.

The substrate may also originally have hydroxyl groups on part of the surface. An example of such a material is glass, and other examples include those on whose surface a naturally oxidized film or a thermally oxidized film can be formed, such as metals (in particular, base metals), ceramics, and semiconductors. Alternatively, a substrate that has insufficient hydroxyl groups, such as resin, or a substrate that has no hydroxyl groups may be subjected to an appropriate pretreatment to introduce hydroxyl groups into the surface of the substrate or increase hydroxyl groups. Examples of such a pretreatment include plasma treatment (e.g., corona discharge) and ion beam irradiation. Plasma treatment is suitably used to introduce or increase hydroxyl groups on the surface of the substrate, and also to clean the surface of the substrate (to remove foreign matter etc.). Another example of the pretreatment is a method in which an interfacial adsorbent having carbon-to-carbon unsaturated bond groups is formed beforehand in the form of a monomolecular film on the surface of the substrate by using, for example, the LB technique (Langmuir-Blodgett technique) or chemical adsorption technique; and thereafter, the unsaturated bonds are opened in the atmosphere containing oxygen, nitrogen, etc.

Alternatively, the substrate may also have other reactivity groups (e.g., Si-H group) on the surface. Examples of such a substrate include those formed from a material containing a silicone compound or alkoxysilane that has one or more Si-H groups.

Subsequently, a coating film of the present composition or the present copolymer is formed on the surface of the substrate, and the substrate is optionally subjected to posttreatment, depending on this coating film, to form a surface-treated layer.

A coating film or membrane of the present composition or the present copolymer can be formed by applying the present composition or the present copolymer on the surface of the substrate such that the surface is coated with the composition or copolymer. The coating method is not particularly limited, and a wet coating method or a dry coating method, for example, may be used.

Examples of the wet coating method include immersion coating, spin coating, flow coating, spray coating, roll coating, gravure coating, and methods similar to these methods.

Examples of the dry coating method include vacuum deposition, sputtering, CVD, and methods similar to these methods. Specific examples of vacuum deposition include resistance heating, electron beam irradiation, high-frequency heating, ion beam irradiation, and methods similar to these methods. Specific examples of CVD include plasma CVD, optical CVD, thermal CVD, and methods similar to these methods.

Coating by the atmospheric pressure plasma method is also applicable.

When the wet coating method is used, the present composition or the present copolymer is first diluted with a solvent, and applied to the surface of a substrate. From the standpoint of stability of the present composition or the present copolymer and volatility of the solvent, the following solvents are preferable for use: C₅₋C₁₂ aliphatic perfluorohydrocarbons (e.g., perfluorohexane, perfluoromethylcyclohexane and perfluoro-1,3-dimethylcyclohexane); aromatic polyfluorohydrocarbons (e.g., bis(trifluoromethyl)benzene); aliphatic polyfluorohydrocarbons; and hydrofluoroethers (HFE) (e.g., alkyl perfluoroalkyl ethers, such as perfluoro propyl methyl ether (C₃F₇OCH₃), perfluorobutyl methyl ether (C₄F₉OCH₃), perfluorobutyl ethyl ether (C₄F₉OC₂H₅), and perfluoro hexyl methyl ether (C₂F₅CF(OCH₃)C₃F₇) (perfluoroalkyl groups and alkyl groups may be linear or branched). These solvents may be used alone, or in any mixture of two or more. Of these, hydrofluoroethers are preferable, and perfluorobutyl methyl ether (C₄F₉OCH₃) and/or perfluorobutyl ethyl ether (C₄F₉OC₂H₅) are particularly preferable.

As described above, a surface-treated layer derived from a film of the present composition or the present copolymer is formed on the surface of the substrate, and a present article is produced. The thus-prepared surface-treated layer is suitably used as a functional thin film having water repellency, oil repellency, antifouling properties (e.g., to prevent stains caused by fingerprints), surface smoothness (or lubricity, for example, ease of wiping off stains, such as fingerprints, and excellent tactile sensation through the fingers), and friction resistance.

The present invention specifically further relates to an optical material including the cured product as its outermost layer.

Examples of the optical material preferably include, in addition to optical materials relevant to the displays etc. described below, a wide range of optical materials.
Examples: displays, such as cathode-ray tubes (CRT: TV, PC screens), liquid crystal displays, plasma displays, organic EL displays, inorganic thin-film EL dot-matrix displays, rearprojection displays, vacuum fluorescent displays (VFD), and field emission displays (FED); protective plates of these displays; and these displays or plates on whose surface an antireflection film treatment has been performed.

The thus-obtained article including a surface-treated layer is not particularly limited, and can be an optical component. Examples of the optical component include the following: lenses of glasses; front protective plates, antireflection plates, polarization plates, and anti-glare plates of displays, such as PDP and LCD; touch-panel sheets of devices, such as cellular phones and personal digital assistants; the surface of optical discs, such as Blu-ray discs, DVD discs, CD-Rs, and MOs; and optical fibers.

The thickness of the surface-treated layer is not particularly limited. For an optical component, the thickness of the surface-treated layer is preferably within the range of 1-30 nm, and preferably 1-15 nm, from the standpoint of optical properties, surface smoothness, friction resistance, and antifouling properties.

The above has described in detail the article obtainable from the present composition or the present copolymer.

### Examples

The following describes the present invention in more detail, with reference to Examples.

Hereinbelow, a bond between parentheses in a chemical formula representing the structure of a polymer does not necessarily represent a block polymer linkage, and examples of the bond include linkages of random, block, and alternation polymerization; and any combination thereof.

The following describes the operation performed in the Examples.

### (I) Preparation of Coating Liquid

### (Coating liquid (1): antifouling additives not contained)

(A) 181 g of ethyl acetate, 28 g of a polyisocyanate-based curing agent solution (this solution was prepared by diluting Duranate TPA-100 (trade name, Asahi Kasei Chemicals Corporation) with ethyl acetate to give an active component concentration of 50%), and (B) 100 g of a curable fluorine-containing copolymer (Zeffle GK-570 (trade name, Daikin Industries, Ltd.)) were mixed in a plastic container and shaken by hand, thereby preparing a coating liquid.

### (Coating liquid (2): antifouling additives not contained)

(A) 181 g of ethyl acetate, 28 g of a polyisocyanate-based curing agent solution (this solution was prepared by diluting Duranate TPA-100 (trade name, Asahi Kasei Chemicals Corporation) with ethyl acetate to give a solids content of 50%), (B) 100 g of a curable fluorine-containing copolymer (Zeffle GK570 (trade name, Daikin Industries, Ltd.)), and (C) a perfluoropolyethercontaining copolymer as an antifouling additive (0.2 wt% of the resin solids of GK570) were mixed in a plastic container and shaken by hand, thereby preparing a homogeneous coating liquid.

### (II) Preparation of Coating Film Sample

The coating liquids were individually applied to the surface of a masking paper (Nippon Testpanel Co., Ltd.) with a bar coater (#20), and then dried at 80°C for 3 hours, thereby preparing coating film samples.

### (III) Antifouling Properties Test (Wiping Oil Ink)

Oil ink (magic ink, trade name; Teranishi Chemical Industry Co., Ltd.; black, blue, and red) was applied to the surface of the coating film samples, and the film samples were allowed to stand at room temperature for a time period sufficient to dry the oil ink. Thereafter, the oil ink was wiped with a paper waste cloth (Kimwipe, trade name, Nippon Paper Crecia Co., Ltd.) by applying a predetermined force, and the external appearance of the samples was visually observed and evaluated based on the following evaluation criteria.

### Evaluation

Poor: the color density of the ink after wiping is substantially the same as the color density of the control after wiping (Comparative Example 2) (no noticeable difference).
Good: although the color density of the ink after wiping is clearly lighter than the color density of the control after wiping (Comparative Example 2), the color density is over 1/2 the color density of the control.
Excellent: the color density of the ink after wiping is 1/2 or less the color density of the control after wiping (Comparative Example 2).

### (IV) Measurement of Water Contact Angle and Hexadecane Contact Angle

The water contact angle and hexadecane contact angle were measured with a contact angle meter (Kyowa Interface Science Co., Ltd.) using 2 µL of water or 2 µL of hexadecane.

### (V) Measurement of Coefficient of Kinetic Friction

The coefficient of kinetic friction was measured using paper for an abrader with an FPT-F1 (trade name, Labthink) surface tester, in accordance with ASTM D4917.

### (VI) OH Value (mgKOH/g)

The OH value (mgKOH/g) was calculated from NMR measurement results.

### (VII) Fluorine Content (F-cont. (%))

The fluorine content (F-cont. (%)) was calculated from NMR measurement results.

### (VIII) Molecular Weight

The molecular weight was measured by GPC (gel permeation chromatography) analysis.

The following materials were used in the Examples. A fluorine-based solvent (HCFC-225) AK-225 (trade name, AGC Inc.)

### Synthesis Example 1: Synthesis of Initiator (PFPE4000VETFA)

### (1) PFPE4000VE

2-[3-poly(perfluoropropyloxy)-2,2,3,3-tetrafluoropropoxy]ethoxy vinyl ether (which may be referred to as "PFPE4000VE") was synthesized using an alcohol having perfluoropolyether groups (Demnum SA, trade name, number average molecular weight 4000, Daikin Industries, Ltd.) in accordance with the method disclosed in WO 2013/115380.

### (2) PFPE4000VETFA

A PFPE4000VE group-containing cationic polymerization initiator (which may be referred to as "PFPE4000VETFA") was synthesized using PFPE4000VE in accordance with the method disclosed in WO 2013/115380.

### Synthesis Example 2 (Synthesis of PFPE4000-IBVE₅₂/HEVE₁₆-H)

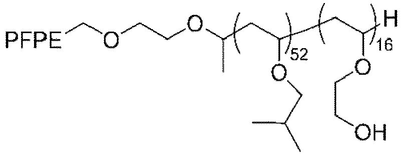

### (1) Synthesis of hydroxy-protected polymer (PFPE4000-IBVE₅₂/AcOVE₁₆-H)

9.55 mL of a fluorine-based solvent, 0.5 mL of 1,4-dioxane, 1.30 mL of isobutyl vinyl ether (IBVE), and 0.65 mL of 2-acetoxy ethyl vinyl ether (AcOVE) were placed in a container, thereby preparing a monomer solution.

2.0 mL of a solution of PFPE4000VETFA in a fluorine-based solvent (0.1 M) was added to the monomer solution in the container. 1 mL (0.2 mmol) of an ethylaluminum sesquichloride (Et_{1.5} AlCl_{1.5}) solution diluted with a fluorine-based solvent was added thereto to start polymerization in an ice bath. After 3.5 hours, a solution of 2 M LiBH₄ in THF was added thereto to end the reaction. After the catalyst residue was removed, the solvent was evaporated, thereby obtaining a hydroxy-protected polymer (PFPE4000-IBVE₅₂/AcOVE₁₆-H).

### ¹H NMR (hexafluoro-m-xylene (mXHF)): δ 0.50-0.95 (m), 1.30-2.00 (m), 2.85-3.20 (m), 3.25-3.80 (m), 3.90-4.10 (m)

### (2) Deprotection

A 10 N NaOH aqueous solution and 55 equivalents of ethanol were added to a 5 wt% solution of the hydroxy-protected polymer in THF such that NaOH was about 10 equivalents relative to AcOVE units, and the mixture was stirred. After 4.5 hours, the reaction mixture was neutralized with diluted hydrochloric acid, and the generated salt and the solvent were removed, thereby obtaining the title polymer.

### ¹H NMR (hexafluoro-m-xylene (mXHF)): δ 0.50-0.95 (m), 1.30-2.00 (m), 2.85-3.20 (m), 3.25-3.80 (m)

The peak observed in the 3.90-4.10 ppm region of NMR of the hydroxy-protected polymer in section (1) disappeared.

### Comparative Example 1 (Synthesis of Polymer PFPE4000-IBVE₆₆-H of Comparative Example 1)

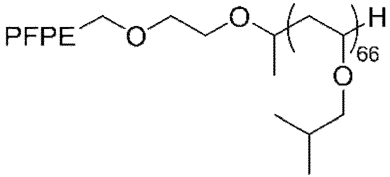

The title polymer was synthesized in the same manner as in Synthesis Example 2(1), except that AcOVE was not used, and the amount of IBVE was changed to 1.7 mL.

### ¹H NMR (hexafluoro-m-xylene (mXHF)): δ 0.55-1.05 (m), 1.20-2.00 (m), 2.80-3.70 (m), 3.75-3.85 (m)

The polymer had a number average molecular weight of 8800, a weight average molecular weight of 13000, a molecular weight distribution of 1.48, an OH value of 0 mgKOH/g, and a fluorine content of 25.7%. 1.72 g of the polymer and 15.5 g of MIBK were placed in a screw tube, and shaken by hand. As a result, the polymer was dissolved without sedimentation (solution concentration = 10 wt%).

### Example 1 (Synthesis of Polymer (PFPE4000-EHVE₃₃/DEGVE₄-H) of Example 1)

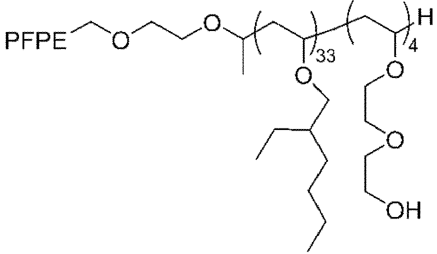

wherein the numbers adjacent to the parentheses indicate the number of repeating units.

### (1) Synthesis of Hydroxy-Protected Polymer (PFPE4000-EHVE₃₃/AcOEOVE₄-H)

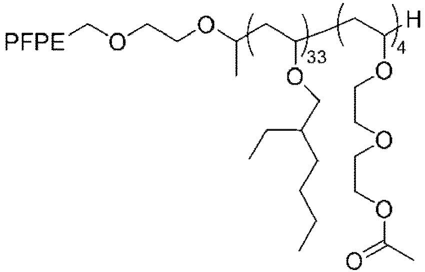

wherein the numbers adjacent to the parentheses indicate the number of repeating units.

9.68 mL of a fluorine-based solvent, 1.0 mL of 1,4-dioxane, 1.15 mL of 2-ethyl hexyl vinyl ether (EHVE), and 0.17 mL of 2-(2-vinyloxyethoxy) ethyl acetate (AcOEOVE) were placed in a container, thereby preparing a monomer solution.

2.0 mL of a solution of PFPE4000VETFA in a fluorine-based solvent (0.1 M) was added to the monomer solution in the container. 1 mL (0.2 mmol) of a solution of ethylaluminum sesquichloride (Et_{1.5} AlCl_{1.5}) diluted with a fluorine-based solvent was added thereto to start polymerization in an ice bath. After 45 minutes, a solution of 2 M LiBH₄ in THF was added thereto to end the reaction. After the catalyst residue was removed, the solvent was evaporated, thereby obtaining a hydroxy-protected polymer (PFPE4000-EHVE₃₃/AcOEOVE₄-H).

### ¹H NMR (hexafluoro-m-xylene (mXHF)): δ 0.55-0.90 (m), 0.95-1.05 (m), 1.05-1.85 (m), 2.95-3.90 (m), 3.95-4.05 (m)

### (2) Deprotection

Deprotection was performed in the same manner as in Synthesis Example 2(2), thereby obtaining the title polymer. The polymer had a number average molecular weight of 5700, a weight average molecular weight of 7600, a molecular weight distribution of 1.32, an OH value of 22.9 mgKOH/g, and a fluorine content of 28.2%. 0.1 g of the polymer and 4.9 g of a mixture solvent of MEK/propylene glycol monomethyl ether (PGME) (1/1 (w/w)) were placed in a screw tube, and the mixture was shaken by hand. As a result, the polymer was dissolved without sedimentation (solution concentration = 2 wt%).

### ¹H NMR (hexafluoro-m-xylene (mXHF)): δ 0.55-0.90 (m), 0.95-1.05 (m), 1.05-1.85 (m), 2.95-3.90 (m)

The peak observed in the 3.95-4.05 ppm region of NMR of the hydroxy-protected polymer in section (1) disappeared.

### Synthesis Example 3 (Synthesis of PFPE4000-AOEVE₂₂)

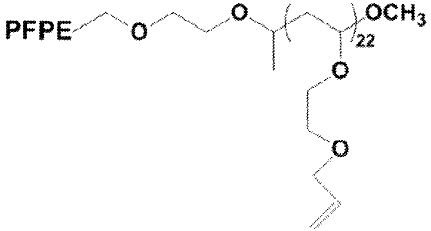

3.72 mL of a fluorine-based solvent (solvent), 0.5 mL of 1,4-dioxane, and 0.28 mL of allyloxy ethyl vinyl ether (AOEVE) were placed in a container.

1 mL of a solution of PFPE4000VETFA in a fluorine-based solvent (0.1 M) was added to the monomer solution in the container. 1.0 mL (0.2 mmol) of a solution of ethylaluminum sesquichloride (Et_{1.5} AlCl_{1.5}) diluted with a fluorine-based solvent was added thereto, and polymerization was started at 0°C. After 30 minutes, methanol was added to end the reaction. After the catalyst residue was removed, the solvent was evaporated, followed by drying under reduced pressure, thereby obtaining an allyl group-containing polymer (PFPE4000-AOEVE₂₂).

### ¹H NMR (hexafluoro-m-xylene (mXHF)): δ 0.80-1.00 (m), 1.30-1.85 (m), 3.05-3.15 (m), 3.15-3.95 (m), 4.75-4.90 (m), 4.95-5.10 (m), 5.55-5.70 (m)

### Synthesis Example 4 (Synthesis of PFPE4000-AOEVE₅/VEMO₁₇)

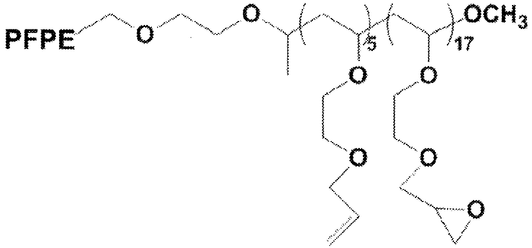

2 g of a 10 wt% solution of PFPE4000-AOEVE₂₂ in dichloromethane was prepared in a container, and a solution of 0.175 g of 73.6% mCPBA in 1.5 mL of dichloromethane was added dropwise thereto in an ice bath, followed by a reaction at room temperature for 42 hours. The reaction mixture was washed with sodium sulfite and sodium bicarbonate water to separate the organic layer, thereby obtaining an epoxy group-containing polymer (PFPE4000-AOEVE₅-VEMO₁₇).

### ¹H NMR (CDCl₃): δ 1.05-1.30 (m), 1.35-2.20 (m), 2.50-2.65 (m), 2.70-2.80 (m), 3.05-3.20 (m), 3.25-4.00 (m), 5.10-5.20 (m), 5.25-5.40 (m), 5.80-5.95 (m)

### Synthesis of Initiator (PFPE2500VETFA)

### (1) PFPE2500VE

2-[3-poly(perfluoropropyloxy)-2,2,3,3-tetrafluoropropoxy]ethoxy vinyl ether (which may be referred to as "PFPE2500VE") was synthesized using an alcohol having perfluoropolyether groups (Demnum SA, trade name, number average molecular weight 2500, Daikin Industries, Ltd.) in accordance with the method disclosed in WO 2013/115380.

### (2) PFPE2500VETFA

A PFPE2500VE group-containing cationic polymerization initiator (which may be referred to as "PFPE2500VETFA") was synthesized using PFPE2500VE in accordance with the method disclosed in WO 2013/115380.

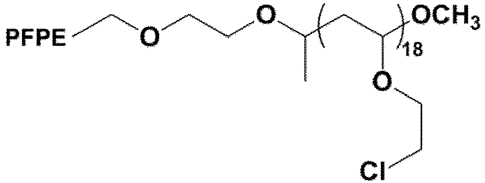

### Synthesis Example 5 (Synthesis of PFPE2500-CEVE₁₈)

4.0 mL of a fluorine-based solvent (solvent), 1.0 mL of ethyl acetate (added base), and 2.0 mL of a solution of 2-chloro ethyl vinyl ether in a fluorine-based solvent (2 M) were placed in a container. 2 mL of a solution of PFPE2500VETFA in a fluorine-based solvent (0.1 M) was added to the monomer solution in the container. 1.0 mL (0.2 mmol) of a solution of ethylaluminum sesquichloride (Et_{1.5}AlCl_{1.5}) diluted with a fluorine-based solvent was added thereto, and polymerization was started at 30°C. After 90 minutes, methanol was added to end the reaction. After the catalyst residue was removed, the solvent was evaporated, followed by drying under reduced pressure, thereby obtaining a polymer (PFPE2500-CEVE₁₈).

### ¹H NMR (AK-225): δ 0.95-1.05 (m), 1.30-1.85 (m), 3.15-3.20 (m), 3.30-3.90 (m)

### Synthesis Example 6 (Synthesis of PFPE2500-AzEVE₁₈)

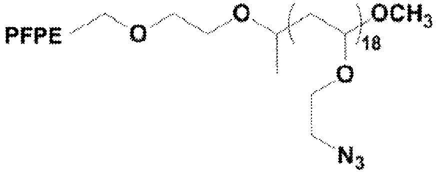

0.3955 g of PFPE2500-CEVE₁₈ was placed in a container and dissolved in 4 mL of DMF. 1.5 equivalents of sodium azide and 0.1 equivalents of n-tetrabutylammonium hydrogen sulfate relative to the CEVE units in the polymer were placed in another flask and dissolved in 2 mL of DMF. To this solution, the previously prepared polymer solution was added dropwise, and the mixture was heated in an oil bath at 75°C for 17.25 hours. The reaction mixture was poured in water, thereby obtaining an azidecontaining polymer (PFPE2500-AzEVE₁₈).

¹H NMR (AK-225): δ 0.95-1.05 (m), 1.35-1.85 (m), 3.05-3.30 (m), 3.30-3.90 (m)
IR: (Neat)v 2928, 2108, 1360, 1312, 1200, 1145, 1116, 1028, 1010, 714 cm⁻¹

### Synthesis Example 7 (Synthesis of PFPE2500-AEVE₁₈)

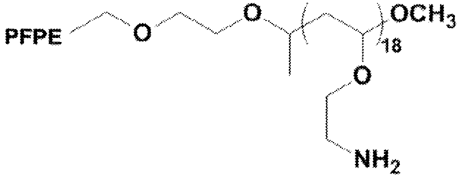

0.1452 g of PFPE2500-AzEVE₁₈ and 2 equivalents of triphenylphosphine relative to the azide groups in the polymer were placed in a container, and dissolved in 4.0 mL of THF. 0.23 mL of water was added thereto, and stirred for 4.5 hours. The reaction mixture was dried with an evaporator, and the unreacted triphenylphosphine and triphenylphosphine oxide (by-products) were dissolved in THF for decantation, thereby obtaining an amino group-containing polymer (PFPE2500-AEVE₁₈).

¹H NMR (AK-225): δ 0.95-1.05 (m), 1.35-1.85 (m), 2.55-2.75, 3.15-3.90 (m)
IR: (Neat)v 2934, 1360, 1314, 1200, 1145, 1116, 1028, 1010, 713 cm⁻¹

### Synthesis Example 8 (Synthesis of PFPE2500-TEVE₁₈)

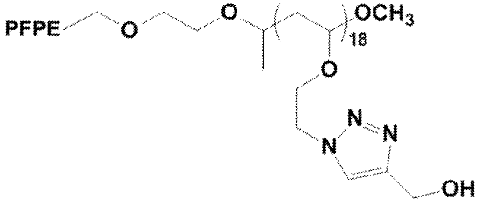

0.1554 g of PFPE2500-AzEVE₁₈ was placed in a container, and dissolved in 3 mL of DMF. 0.1 equivalents of copper(I) bromide relative to the azide groups in the polymer was placed in another container, and dissolved in 3.1 mL of DMF. 1.8 equivalents of propargyl alcohol relative to the azide groups in the polymer was added thereto, and stirred. To this solution, the solution of PFPE2500-AzEVE₁₈ in DMF was added, and a reaction was started. After being stirred for 24 hours at room temperature, the reaction mixture was added dropwise to toluene, and the unreacted alcohol was removed by decantation, followed by drying the polymer under reduced pressure.

### ¹H NMR (DMSO-d₆): δ 0.80-1.00 (m), 1.15-1.80 (m), 1.35-1.85 (m), 2.80-4.00 (m), 4.10-4.90 (m), 5.05-5.60 (m), 7.70-8.20 (m)

### Test Example: Antifouling Properties Test (Wiping Oil Ink)

Table 1 shows the results of the antifouling properties test (wiping oil ink). Fig. 1 shows a photograph of samples on which ink was wiped in the visual test. In each Example of Fig. 1, the color of the ink was black, blue, and red from above. As is clear from the results, high antifouling properties were confirmed in the Example using the present copolymer.

**Table 1**

| | Control (Comparative Example 2) | Comparative Example 1 | Example 1 |
|---|---|---|---|
| GK570 (non-volatile component: 65%) | 100 | 100 | 100 |
| Polymer of Comparative Example 1 | - | 0.13 | - |
| Polymer of Example 1 | - | - | 0.13 |
| TPA-100/Ethyl Acetate (non-volatile component: 50 wt%) | 28 | 28 | 28 |
| Ethyl Acetate | 181 | 181 | 181 |
| Amount of Antifouling Agent (active component relative to GK570 solids content) | 0 | 0.2 | 0.2 |
| Evaluation of Wiping Test | Poor | Poor | Excellent |

### Test Example: Addition Experiment to GK570 - Contact Angle and Smoothness

Table 2 shows the test results of water contact angle, hexadecane (HD) contact angle, and kinetic friction. As is clear from the results, high water repellency, oil repellency, and smoothness were confirmed in the Example using the present copolymer.

**Table 2**

| | Control (Comparative Example 2) | Comparative Example 1 | Example 1 |
|---|---|---|---|
| Water Contact Angle /° | 89.3 | 93.3 | 99.6 |
| Hexadecane Contact Angle /° | 23.1 | 24.1 | 42.2 |
| Coefficient of Kinetic Friction | 0.49 | 0.51 | 0.23 |

### Industrial Applicability

The fluorine-containing copolymer of the present invention can be suitably used in antifouling coating compositions.

## Claims

1. A copolymer, which is a fluorine-containing copolymer of formula (1): 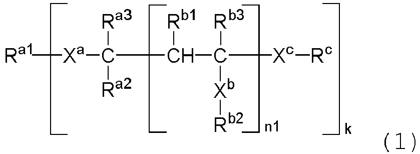 wherein
R^{a1} is a mono- or divalent group containing a perfluoropolyether group,
X^{a} is -O-, phenylene, -N(-R^{E})- (R^{E} is an organic group), or carbazolylene,
R^{a2} is H or alkyl,
R^{a3} is H or alkyl,
R^{b1} each independently is H or alkyl,
R^{b2} each independently is H or an organic group optionally having a hydroxyl group,
R^{b3} is H or alkyl,
X^{b} is -O-, phenylene, -N(-R^{E})- (R^{E} is an organic group), or carbazolylene, with the proviso that if R^{b2} is H, X^{b} is phenylene,
R^{c} is H, methyl, a perfluoropolyether group-containing group, or an organic group optionally having a hydroxyl group,
X^{c} is -O-, -S-, -NH-, or a single bond,
k s 1 or 2, and
n1 is an integer of ≥ 1,
with the proviso that at least one or both of R^{a2} or R^{a3} is alkyl, and if R^{c} is not an organic group having a hydroxyl group, at least one R^{b2} is an organic group having a hydroxyl group.

2. The copolymer of claim 1, wherein the perfluoropolyether group in R^{a1} has a number average molecular weight of ≥ 1000.

3. The copolymer of claim 1 or 2, wherein the perfluoropolyether group R^{a1} has a moiety of the formula -(C*ₚ*F_{2*p*}O)*ₙ*-, wherein *p* each independently is an integer of 1-6, and n is the number of repeating units.

4. The copolymer of claim 3, wherein R^{a1} is a monovalent group of the formula X^{ra}-(C*ₚ*F*₂ₚ*O)*ₙₐ*-Y*^{ra}*-L*^{a}*- (a1), wherein
X^{ra} is F or C₁₋₈-perfluoroalkoxy,
*p* each independently is an integer of 1-6, and
*na* is an integer of 1-1000,
Y*^{ra}* is a C₁₋₆-perfluoroalkylene chain, and
L*^{a}* is a linker.

5. The copolymer of claim 4, wherein the moiety (C*ₚ*F_{2*p*}O)*ₙₐ* in formula (a1) comprises at least one structural unit selected from -CF₂-CF₂-CF₂-O-, -CF(-CF₃)-CF₂-O-, -CF₂-O-, -CF₂-CF₂-O-, and -CF (-CF₃)-O-.

6. The copolymer of claim 5, wherein
- (C*ₚ*F_{2*p*}O)*ₙₐ* comprises -CF₂-CF₂-CF₂-O-, and
Y^{ra} is -CF₂-CF₂-; or
- (C*ₚ*F_{2*p*}O)*ₙₐ* comprises -CF₂-CF₂-O- and -CF₂-O-, and
Y^{ra} is -CF₂-; or
- (C*ₚ*F*₂ₚ*O)*ₙₐ* comprises -CF(-CF₃)-CF₂-O-, and
Y^{ra} is -CF(-CF₃)-; or
- (C*ₚ*F*₂ₚ*O)*ₙₐ* comprises -CF(-CF₃)-CF₂-O- and -CF₂-O-, and
Y^{ra} is -CF(-CF₃)-.

7. The copolymer any of claims 4-6, wherein L^{a} is -CH₂-O-CH₂-CH₂- or -CH₂-.

8. The copolymer of claim 3, wherein R^{a1} is a divalent group of the formula -L^{a}'-Y^{ra}'-O-(C*ₚ*F_{2*p*}O)*ₙₐ* -Y*^{ra}*-L*^{a}*- (a2), wherein
L*^{a}*' and L*^{a}* each independently is a linker,
Y*^{ra}*' and Y*^{ra}* each independently is a C₁-C₆ perfluoroalkylene chain,
*p* each independently is an integer of 1-6, and
*na* is an integer of 1-1000.

9. The copolymer of claim 8, wherein the moiety (C*ₚ*F_{2*p*}O)*ₙₐ* in formula (a2) each independently comprises at least one structural unit selected from -CF₂-CF₂-CF₂-O-, -CF(-CF₃)-CF₂-O-, -CF₂-O-, -CF₂-CF₂-O-, and -CF(-CF₃)-O-.

10. The copolymer of claim 8, wherein
- Y*^{ra}*' is -CF₂-CF₂-,
(C*ₚ*F_{2*p*}O)*ₙₐ* comprises -CF₂-CF₂-CF₂-O-, and
Y*^{ra}* is -CF₂-CF₂-; or
- Y*^{ra}*' is -CF₂-,
(C*ₚ*F_{2*p*}O)*ₙₐ* comprises -CF₂-CF₂-O- and -CF₂-O-, and
Y*^{ra}* is -CF₂-; or
- Y*^{ra}*' is -CF(-CF₃)-,
(C*ₚ*F*₂ₚ*O)*ₙₐ* comprises -CF(-CF₃)-CF₂-O-, and
Y*^{ra}* is -CF(-CF₃)-; or
- Y*^{ra}*' is -CF(-CF₃)-,
(C*ₚ*F*₂ₚ*O)*ₙₐ* comprises -CF(-CF₃)-CF₂-O- and -CF₂-O-, and
Y*^{ra}* is -CF(-CF₃)-.

11. The copolymer of claim 3, wherein the perfluoropolyether group in R^{a1} is a divalent group of the formula:
-L*^{a}*' -Y*^{ra}*' - (OC_{*p*'}F_{2*p*'})_{*na*'}-O-Rf-O-(C*ₚ*F*₂ₚ*O)*ₙₐ*-Y^{ra}-L^{a}- (a2')
wherein
L*^{a}*' and L*^{a}* each independently is a linker,
Y*^{ra}*' and Y*^{ra}* each independently are a C₁₋₆-perfluoroalkylene chain,
Rf is a perfluoroalkylene chain, and
*na'* and *na* each independently are an integer of 1-1000.

12. The copolymer of claim 11, wherein
Y*^{ra}*' is -CF(-CF₃)-,
(OC_{*p*'}F_{2*p*'})_{*na*'} comprises -O-CF₂-CF(-CF₃)-,
Rf is a C₁₋₈-perfluoroalkylene chain,
(C*ₚ*F*₂ₚ*O)*ₙₐ* is -CF(-CF₃)-CF₂-O-, and
Y*^{ra}* is -CF(-CF₃)-.

13. The copolymer of any of claims 8-12, wherein
- L^{a}' is -CH₂-CH₂-O-CH₂- and L^{a} is -CH₂-O-CH₂-CH₂-; or
- L^{a}' is -CH₂-, and L^{a} is -CH₂-.

14. The copolymer any of claims 1-13, wherein R^{c} is not an organic group having a hydroxyl group, and at least one R^{b2} is an organic group having a hydroxyl group.

15. The copolymer of claim 14, wherein the functional group of the organic group having a hydroxyl group is capable of bonding to X*^{b}* via a linker selected from
- (CHR*^{y}*)*ₙ*-, -(CHR*^{y}*)*ₙ*-O-, -(CHR*^{y}*)*ₙ*-O-(CHR*^{y}*)*ₙ*- and
- (CHR*^{y}*)*ₙ*-O-(CHR*^{y}*)*ₙ*-O-, wherein *R^{y}* each independently is H or methyl, and *n* each independently is an integer of 1-40.

16. The copolymer of claim 14or 15, wherein R^{c} is H or methyl.

17. The copolymer any of claims 1-15, wherein R^{c} is an organic group having a hydroxyl group.

18. A composition containing the copolymer any of claims 1-17, and a compound containing a group having reactivity with a hydroxyl group.

19. A polymer having
(1) at least one structural unit derived from the copolymer of any of claims 1-17, and
(2) at least one structural unit derived from a compound containing a group having reactivity with a hydroxyl group.

20. An article which (i) has a coating film comprising the composition of claim 18 or (ii) contains the polymer of claim 19.

## Patentansprüche

1. Copolymer, das ein fluorhaltiges Copolymer der Formel (1) ist: 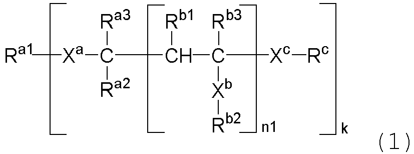 worin
R^{a1} eine ein- oder zweiwertige Gruppe ist, die eine Perfluorpolyethergruppe enthält,
X^{a} -O-, Phenylen, -N(-R^{E})- (R^{E} ist eine organische Gruppe) oder Carbazolylen ist,
R^{a2} H oder Alkyl ist,
R^{a3} H oder Alkyl ist,
R^{b1} jeweils unabhängig H oder Alkyl ist,
R^{b2} jeweils unabhängig H oder eine organische Gruppe ist, die gegebenenfalls eine Hydroxylgruppe aufweist,
R^{b3} H oder Alkyl ist,
X^{b} -O-, Phenylen, -N(-R^{E})- (R^{E} ist eine organische Gruppe) oder Carbazolylen ist, mit der Maßgabe, dass wenn R^{b2} H ist, X^{b} Phenylen ist,
R^{c} H, Methyl, eine Perfluorpolyethergruppen-haltige Gruppe oder eine organische Gruppe ist, die gegebenenfalls eine Hydroxylgruppe aufweist,
X^{c} -O-, -S-, -NH- oder eine Einfachbindung ist,
k s 1 oder 2 ist und
n1 eine ganze Zahl von ≥ 1 ist,
mit der Maßgabe, dass mindestens eines oder beide von R^{a2} oder R^{a3} Alkyl ist, und falls R^{c} keine organische Gruppe ist, die eine Hydroxylgruppe aufweist, mindestens ein R^{b2} eine organische Gruppe ist, die eine Hydroxylgruppe aufweist.

2. Copolymer gemäß Anspruch 1, worin die Perfluorpolyethergruppe in R^{a1} ein zahlenmittleres Molekulargewicht von ≥ 1000 aufweist.

3. Copolymer gemäß Anspruch 1 oder 2, worin die Perfluorpolyethergruppe R^{a1} eine Einheit der Formel - (C*ₚ*F_{2*p*}O)*ₙ*- aufweist, worin *p* jeweils unabhängig eine ganze Zahl von 1-6 ist und *n* die Anzahl der Wiederholungseinheiten ist.

4. Copolymer gemäß Anspruch 3, worin R^{a1} eine einwertige Gruppe der Formel X^{ra}-(C*ₚ*F*₂ₚ*O)*ₙₐ*-Y*^{ra}*-L*^{a}*- (a1) ist, worin
X^{ra} F oder C₁₋₈-Perfluoralkoxy ist,
*p* jeweils unabhängig eine ganze Zahl von 1-6 ist und
*na* eine ganze Zahl von 1-1000 ist,
Y*^{ra}* eine C₁₋₆-Perfluoralkylenkette ist und
L*^{a}* ein Linker ist.

5. Copolymer gemäß Anspruch 4, worin die Einheit (C*ₚ*F*₂ₚ*O)*ₙₐ* in Formel (a1) mindestens eine Struktureinheit umfasst, ausgewählt aus -CF₂-CF₂-CF₂-O-, -CF (-CF₃)-CF₂-O-, -CF₂-O-, -CF₂-CF₂-O- und -CF(-CF₃)-O-.

6. Copolymer gemäß Anspruch 5, worin
- (C*ₚ*F*₂ₚ*O)*ₙₐ*-CF₂-CF₂-CF₂-O- umfasst und
Y^{ra} -CF₂-CF₂- ist; oder
- (C*ₚ*F*₂ₚ*O)*ₙₐ*-CF₂-CF₂-O- und -CF₂-O- umfasst und
Y^{ra} -CF₂- ist; oder
- (C*ₚ*F*₂ₚ*O)*ₙₐ*-CF(-CF₃)-CF₂-O- umfasst und
Y^{ra} -CF(-CF₃)- ist; oder
- (C*ₚ*F*₂ₚ*O)*ₙₐ*-CF(-CF₃)-CF₂-O- und -CF₂-O- umfasst und
Y^{ra} -CF(-CF₃)- ist.

7. Copolymer gemäß einem der Ansprüche 4-6, worin L^{a} -CH₂-O-CH₂-CH₂- oder -CH₂- ist.

8. Copolymer gemäß Anspruch 3, worin R^{a1} eine zweiwertige Gruppe der Formel -L*^{a}*'-Y*^{ra}*'-O- (C*ₚ*F_{2*p*}O)*ₙₐ*-Y*^{ra}*-L*^{a}*- (a2) ist, worin
L*^{a}*' und L*^{a}* jeweils unabhängig ein Linker ist,
Y*^{ra}*' und Y*^{ra}* jeweils unabhängig eine C₁-C₆-Perfluoralkylenkette ist,
*p* jeweils unabhängig eine ganze Zahl von 1-6 ist und
*na* eine ganze Zahl von 1-1000 ist.

9. Copolymer gemäß Anspruch 8, worin die Einheit (C*ₚ*F*₂ₚ*O)*ₙₐ* in Formel (a2) jeweils unabhängig mindestens eine Struktureinheit umfasst, ausgewählt aus -CF₂-CF₂-CF₂-O-, - CF(-CF₃)-CF₂-O-, -CF₂-O-, -CF₂-CF₂-O- und -CF(-CF₃)-O-.

10. Copolymer gemäß Anspruch 8, worin
- Y*^{ra}*' -CF₂-CF₂- ist,
(C*ₚ*F*₂ₚ*O)*ₙₐ* -CF₂-CF₂-CF₂-O- umfasst und
Y*^{ra}* -CF₂-CF₂- ist; oder
- Y*^{ra}*' -CF₂- ist,
(C*ₚ*F*₂ₚ*O)*ₙₐ* -CF₂-CF₂-O- und -CF₂-O- umfasst und
Y*^{ra}* -CF₂- ist; oder
- Y*^{ra}*' -CF(-CF₃)- ist,
(C*ₚ*F*₂ₚ*O)*ₙₐ* -CF(-CF₃)-CF₂-O- umfasst und
Y*^{ra}* -CF(-CF₃)- ist; oder
- Y*^{ra}*' -CF(-CF₃)- ist,
(C*ₚ*F*₂ₚ*O)*ₙₐ* -CF(-CF₃)-CF₂-O- und -CF₂-O- umfasst und
Y*^{ra}* -CF(-CF₃)- ist.

11. Copolymer gemäß Anspruch 3, worin die Perfluorpolyethergruppe in R^{a1} eine zweiwertige Gruppe der folgenden Formel ist:
- L^{a}'-Y*^{ra}'*-(OC_{p'}F_{2p'})_{na'}-O-Rf-O-(C*ₚ*F*₂ₚ*O)*ₙₐ*-Y^{ra}-L^{a}- (a2') worin
L*^{a}*' und L*^{a}* jeweils unabhängig ein Linker ist,
Y*^{ra}*' und Y*^{ra}* jeweils unabhängig eine C₁₋₆-Perfluoralkylenkette sind,
Rf *na'* und *na* eine Perfluoralkylenkette ist und jeweils unabhängig eine ganze Zahl von 1-1000 sind.

12. Copolymer gemäß Anspruch 11, worin
Y*^{ra}*' (OC_{*p*'}F_{2*p*'})_{*na*'} -CF(-CF₃)- ist, -O-CF₂-CF(-CF₃)- umfasst,
Rf (C*ₚ*F*₂ₚ*O)*ₙₐ* eine C₁₋₈-Perfluoralkylenkette ist, -CF(-CF₃)-CF₂-O- ist und
Y*^{ra}* -CF(-CF₃)- ist.

13. Copolymer gemäß einem der Ansprüche 8-12, worin
- L^{a}' -CH₂-CH₂-O-CH₂- ist und L^{a} -CH₂-O-CH₂-CH₂- ist; oder
- L^{a}' -CH₂- ist und L^{a} -CH₂- ist.

14. Copolymer gemäß einem der Ansprüche 1-13, worin R^{c} keine organische Gruppe ist, die eine Hydroxylgruppe aufweist, und mindestens ein R^{b2} eine organische Gruppe ist, die eine Hydroxylgruppe aufweist.

15. Copolymer gemäß Anspruch 14, worin die funktionelle Gruppe der organischen Gruppe, die eine Hydroxylgruppe aufweist, an X*^{b}* über einen Linker binden kann, der ausgewählt ist aus
- (CHR*^{y}*)*ₙ*-, -(CHR*^{y}*)*ₙ*-O-, - (CHR*^{y}*)*ₙ*-O-(CHR*^{y}*)*ₙ*- und
- (CHR*^{y}*)*ₙ*-O-(CHR*^{y}*)*ₙ*-O-, worin R*^{y}* jeweils unabhängig H oder Methyl ist, und n jeweils unabhängig eine ganze Zahl von 1-40 ist.

16. Copolymer gemäß Anspruch 14 oder 15, worin R^{c} H oder Methyl ist.

17. Copolymer gemäß einem der Ansprüche 1-15, worin R^{c} eine organische Gruppe ist, die eine Hydroxylgruppe aufweist.

18. Zusammensetzung, die das Copolymer gemäß einem der Ansprüche 1-17 und eine Verbindung enthält, die eine Gruppe enthält, die Reaktivität mit einer Hydroxylgruppe aufweist.

19. Polymer, aufweisend
(1) mindestens eine Struktureinheit, die von dem Copolymer gemäß einem der Ansprüche 1-17 abgeleitet ist, und
(2) mindestens eine Struktureinheit, die von einer Verbindung abgeleitet ist, die eine Gruppe enthält, die Reaktivität mit einer Hydroxylgruppe aufweist.

20. Gegenstand, der (i) einen Beschichtungsfilm aufweist, der die Zusammensetzung gemäß Anspruch 18 umfasst, oder (ii) das Polymer gemäß Anspruch 19 enthält.

## Revendications

1. Copolymère, qui est un copolymère fluoré de formule (1) : 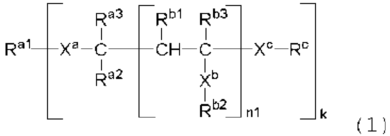 dans lequel
R^{a1} est un groupe monovalent ou divalent contenant un groupe perfluoropolyéther,
X^{a} est -O-, du phénylène, -N(-R^{E})- (R^{E} est un groupe organique), ou du carbazolylène,
R^{a2} est H ou un alkyle,
R^{a3} est H ou un alkyle,
R^{b1} chacun indépendamment est H ou un alkyle,
R^{b2} chacun indépendamment est H ou un groupe organique ayant optionnellement un groupe hydroxyle,
R^{b3} est H ou un alkyle,
X^{b} est -O-, du phénylène, -N(-R^{E})- (R^{E} est un groupe organique), ou du carbazolylène, avec la condition que si R^{b2} est H, X^{b} est du phénylène,
R^{c} est H, du méthyle, un groupe contenant un groupe perfluoropolyéther ou un groupe organique ayant optionnellement un groupe hydroxyle,
X^{c} est -O-, -S-, -NH-, ou une liaison simple,
k est 1 ou 2, et
*n*1 est un nombre entier ≥ 1,
avec la condition qu'au moins un ou chacun des deux de R^{a2} ou R^{a3} soient des alkyles, et que si R^{c} n'est pas un groupe organique ayant un groupe hydroxyle, au moins un R^{b2} soit un groupe organique ayant un groupe hydroxyle.

2. Copolymère selon la revendication 1, dans lequel le groupe perfluoropolyéther dans R^{a1} a un poids moléculaire moyen en nombre ≥ 1000.

3. Copolymère selon la revendication 1 ou la revendication 2, dans lequel le groupe perfluoropolyéther R^{a1} a une fraction de la formule -(C*ₚ*F_{2*p*}O)*ₙ*-, dans lequel *p* chacun indépendamment est un nombre entier de 1 à 6, et *n* est le nombre d'unités de répétition.

4. Copolymère selon la revendication 3, dans lequel R^{a1} est un groupe monovalent de la formule X^{ra}-(C*ₚ*F_{2*p*}O)*ₙₐ*-Y*^{ra}*-L*^{a}*-(a1), dans lequel
X^{ra} est F ou du perfluoroalkoxy en C₁₋₈,
*p* chacun indépendamment est un nombre entier de 1 à 6, et
*na* est un nombre entier de 1 à 1000,
Y*^{ra}* est une chaîne de perfluoroalkylène en C₁₋₆, et
L*^{a}* est un agent de liaison.

5. Copolymère selon la revendication 4, dans lequel la fraction (C*ₚ*F_{2*p*}O)*ₙₐ* dans la formule (a1) comprend au moins une unité structurelle sélectionnée parmi -CF₂-CF₂-CF₂-O-, -CF(-CF₃)-CF₂-O-, -CF₂-O-, -CF₂-CF₂-O-, et -CF(-CF₃)-O-.

6. Copolymère selon la revendication 5, dans lequel
- (C*ₚ*F_{2*p*}O)*ₙₐ* comprend -CF₂-CF₂-CF₂-O-, et
Y^{ra} est -CF₂-CF₂- ; ou
- (C*ₚ*F_{2*p*}O)*ₙₐ* comprend -CF₂-CF₂-O- et -CF₂-O-, et
Y^{ra} est -CF₂- ; ou
- (C*ₚ*F_{2*p*}O)*ₙₐ* comprend -CF(-CF₃)-CF₂-O-, et
Y^{ra}est -CF(-CF₃)- ; ou
- (C*ₚ*F_{2*p*}O)*ₙₐ* comprend -CF(-CF₃)-CF₂-O- et -CF₂-O-, et
Y^{ra} est -CF(-CF₃)-.

7. Copolymère selon l'une quelconque des revendications 4 à 6, dans lequel L^{a} est -CH₂-O-CH₂-CH₂- ou -CH₂-.

8. Copolymère selon la revendication 3, dans lequel R^{a1} est un groupe divalent de la formule -L*^{a}*'-Y*^{ra}*'-O-(C*ₚ*F_{2*p*}O)*ₙₐ* -Y*^{ra}*-L*^{a}*- (a2), dans lequel
L*^{a}*' et L*^{a}* chacun indépendamment est un agent de liaison.
Y*^{ra}*' et Y*^{ra}* chacun indépendamment est une chaîne de perfluoroalkylène en Ci-Ce,
p chacun indépendamment est un nombre entier de 1 à 6, et
*na* est un nombre entier de 1 à 1000.

9. Copolymère selon la revendication 8, dans lequel la fraction (C*ₚ*F_{2*p*}O)*ₙₐ* dans la formule (a2) chacun indépendamment comprend au moins une unité structurelle sélectionnée parmi -CF₂-CF₂-CF₂-O-, -CF(-CF₃)-CF₂-O-, -CF₂-O-, -CF₂-CF₂-O-, et - CF(-CF₃)-O-.

10. Copolymère selon la revendication 8, dans lequel
- Y*^{ra}*' est -CF₂-CF₂-,
(C*ₚ*F_{2*p*}O)*ₙₐ* comprend -CF₂-CF₂-CF₂-O-, et
Y*^{ra}* est -CF₂-CF₂- ; ou
- Y*^{ra}*' est -CF₂-,
(C*ₚ*F_{2*p*}O)*ₙₐ* comprend -CF₂-CF₂-O- et -CF₂-O-, et
Y*^{ra}* est -CF₂- ; ou
- Y*^{ra}*' est -CF(-CF₃)-,
(C*ₚ*F_{2*p*}O)*ₙₐ* comprend -CF(-CF₃)-CF₂-O-, et
Y*^{ra}* est -CF(-CF₃)- ; ou
- Y*^{ra}*' est -CF(-CF₃)-,
(C*ₚ*F_{2*p*}O)*ₙₐ* comprend -CF(-CF₃)-CF₂-O- et -CF₂-O-, et
Y*^{ra}* est -CF(-CF₃)-.

11. Copolymère selon la revendication 3, dans lequel le groupe perfluoropolyéther dans R^{a1} est un groupe divalent de la formule :
-L*^{a}*'-Y*^{ra}*'-(OC_{*p*'}F_{2*p'*})_{*na*'}-O-Rf-O-(C*ₚ*F_{2*p*}O)*ₙₐ*-Y^{ra}-L^{a}- (a2')
dans lequel
L*^{a}*' et L*^{a}* chacun indépendamment est un agent de liaison,
Y*^{ra}*' et Y*^{ra}* chacun indépendamment sont une chaîne de perfluoroalkylène en C₁₋₆,
Rf est une chaîne de perfluoroalkylène, et
*na'* et *na* chacun indépendamment sont un nombre entier de 1 à 1000.

12. Copolymère selon la revendication 11, dans lequel
Y*^{ra}*' est -CF(-CF₃)-,
(OC*_{p'}*F_{2*p*'})_{*na*'} comprend -O-CF₂-CF(-CF₃)-,
Rf est une chaîne de perfluoroalkylène en C₁₋₈-,
(C*ₚ*F_{2*p*}O)*ₙₐ* est -CF(-CF₃)-CF₂-O-, et
Y*^{ra}* est -CF(-CF₃)-.

13. Copolymère selon l'une quelconque des revendications 8 à 12, dans lequel
- L^{a}' est -CH₂-CH₂-O-CH₂- et L^{a} est -CH₂-O-CH₂-CH₂- ; ou
- L^{a}' est -CH₂-, et L^{a} est -CH₂-,

14. Copolymère selon l'une quelconque des revendications 1 à 13, dans lequel R^{c} n'est pas un groupe organique ayant un groupe hydroxyle, et au moins un R^{b2} est un groupe organique ayant un groupe hydroxyle.

15. Copolymère selon la revendication 14, dans lequel le groupe fonctionnel du groupe organique ayant un groupe hydroxyle est capable de se lier à X*^{b} par l'intermédiaire* d'un agent de liaison sélectionné parmi
- (CHR*^{y}*)*ₙ*-, -(CHR*^{y}*)*ₙ*-O-, -(CHR*^{y}*)*ₙ*-O-(CHR*^{y}*)*n*- et
- (CHR*^{y}*)*ₙ*-O-(CHR*^{y}*)*ₙ*-*O*-, dans lequel *R^{y}* chacun indépendamment est H ou du méthyle, et *n* chacun indépendamment est un nombre entier de 1 à 40.

16. Copolymère selon la revendication 14 ou la revendication 15, dans lequel R^{c} est H ou du méthyle.

17. Copolymère selon l'une quelconque des revendications 1 à 15, dans lequel R^{c} est un groupe organique ayant un groupe hydroxyle.

18. Composition contenant le copolymère selon l'une quelconque des revendications 1 à 17, et un composé contenant un groupe ayant une réactivité avec un groupe hydroxyle.

19. Polymère ayant
(1) au moins une unité structurelle dérivée du copolymère selon l'une quelconque des revendications 1 à 17, et
(2) au moins une unité structurelle dérivée d'un composé contenant un groupe ayant une réactivité avec un groupe hydroxyle.

20. Article qui (i) a un film de revêtement comprenant la composition selon la revendication 18, ou (ii) contient le polymère selon la revendication 19.
